# EUROPEAN PATENT APPLICATION

(11) **EP 4 521 193 A1**
(43) Date of publication of application: **12.03.2025**
(21) Application number: 24742444.3
(22) Date of filing: 12.07.2024
(51) Int. Cl.: G06F 1/16, H04M 1/02

(54) **FOLDABLE ELECTRONIC DEVICE FOR REDUCING INFLOW OF EXTERNAL FOREIGN SUBSTANCES**

(30) Priority: 19.07.2023 KR 20230094129; 25.08.2023 KR 20230112205
(71) Applicant: SAMSUNG ELECTRONICS CO., LTD., Yeongtong-gu Suwon-si, Gyeonggi-do 16677 (KR)
(72) Inventor: LEE, Hyunggeun, Suwon-si, Gyeonggi-do 16677 (KR); KIM, Hyeonjun, Suwon-si, Gyeonggi-do 16677 (KR); SHIM, Yousub, Suwon-si, Gyeonggi-do 16677 (KR); LEE, Jaewoo, Suwon-si, Gyeonggi-do 16677 (KR)
(74) Representative: Nederlandsch Octrooibureau
(86) International application number: PCT/KR2024/010058
(87) International publication number: WO 2025/018732

(57) **Abstract**

According to embodiments of the disclosure, a foldable electronic device is provided. The foldable electronic device includes a first housing, a second housing, a hinge module connecting the first housing and the second housing, a flexible display module extending from the first housing to the second housing, a hinge housing combined with the hinge module, a flexible first portion connected to the hinge housing to cover a border corresponding to the hinge module in the flexible display module, and a second portion connected to the hinge housing to be spaced apart from the flexible first portion with the border interposed. The flexible first portion is located closer to the border than the second portion in an unfolded state of the foldable electronic device, and the second portion is located closer to the border than the flexible first portion in a folded state of the foldable electronic device.

## Description

### [Technical Field]

The disclosure relates to a foldable electronic device for reducing the inflow of external foreign matter.

### [Background Art]

A foldable electronic device may include a hinge portion and a flexible display that can be folded through the hinge part.

The above information is presented as background information only to assist with an understanding of the disclosure. No determination has been made, and no assertion is made, as to whether any of the above might be applicable as prior art with regard to the disclosure.

### [Disclosure of Invention]

### [Technical Problem]

External foreign matter such as moisture and/or dust may flow into the interior of the foldable electronic device due to a gap between the hinge portion and the flexible display, so countermeasures are being taken.

Various embodiments of the disclosure provide a foldable electronic device capable of reducing or preventing external foreign matter from entering the interior of the foldable electronic device through the space between the hinge portion and the flexible display. Various embodiments of the disclosure are provided to solve or at least alleviate the problems mentioned above.

The technical problems to be solved in the disclosure are not limited to the above-mentioned technical problems, and any other technical problem not mentioned can be understood by those skilled in the art from the description below.

### [Solution to Problem]

According to embodiments of the disclosure, a foldable electronic device is provided. The foldable electronic device includes a first housing, a second housing, and a hinge module configured to connect the first housing and the second housing. The foldable electronic device includes a flexible display module extending from the first housing to the second housing. The foldable electronic device includes a hinge housing combined with the hinge module. The foldable electronic device includes a flexible first portion connected to the hinge housing. The flexible first portion is configured to cover a border corresponding to the hinge module in the flexible display module. The foldable electronic device includes a second portion connected to the hinge housing. The second portion is spaced apart from the flexible first portion with the border interposed. The flexible first portion is located closer to the border than the second portion in an unfolded state of the foldable electronic device. The second portion is located closer to the border than the flexible first portion in a folded state of the foldable electronic device.

According to embodiments of the disclosure, a foldable electronic device is provided. The foldable electronic device includes a first housing, a second housing, and a hinge module configured to connect the first housing and the second housing. The foldable electronic device includes a flexible display module extending from the first housing to the second housing. The foldable electronic device includes a hinge housing combined with the hinge module. The foldable electronic device includes a flexible first portion. The flexible first portion is connected to the hinge housing to cover a border corresponding to the hinge module in the flexible display module. The foldable electronic device includes a second portion. The second portion is connected to the hinge housing to be spaced apart from the flexible first portion with the border interposed. In a folded state of the foldable electronic device, a front surface of the flexible display module is in contact with the flexible first portion. In the folded state of the foldable electronic device, a rear surface of the flexible display module is in contact with the second portion.

### [Advantageous Effects of Invention]

The foldable electronic device according to embodiments of the disclosure can reduce or prevent the inflow of external foreign matter between the hinge housing and the flexible display module in the unfolded or folded state of the foldable electronic device. This can improve the reliability of foldable electronic devices.

In addition, effects that can be obtained or expected by various embodiments of the disclosure will be explicitly or implicitly disclosed in the detailed description of the embodiments of the disclosure.

### [Brief Description of Drawings]

The above and other aspects, features, and advantages of certain embodiments of the disclosure will become more apparent from the following detailed description taken in conjunction with the accompanying drawings.
FIG. 1 illustrates a diagram showing appearances of a foldable electronic device in an unfolded state, according to an embodiment of the disclosure.
FIG. 2 illustrates a diagram showing appearances of a foldable electronic device in a folded state, according to an embodiment of the disclosure.
FIG. 3 illustrates a cross-sectional view of the foldable electronic device taken along line D-D' of FIG. 1, according to an embodiment of the disclosure.
FIG. 4 illustrates an exploded perspective view of a part of a foldable electronic device in an unfolded state, according to an embodiment of the present disclosure.
FIG. 5 illustrates a diagram showing a part of a foldable electronic device in an unfolded state, according to an embodiment of the disclosure.
FIG. 6 illustrates a cross-sectional view of a part of the foldable electronic device in an unfolded state taken along line D-D' of FIG. 1, according to an embodiment of the disclosure.
FIG. 7 illustrates a cross-sectional view of a part of the foldable electronic device in a folded state taken along line E-E' of FIG. 2, according to an embodiment of the disclosure.
FIG. 8 illustrates a diagram showing a part of a foldable electronic device in an unfolded state, according to an embodiment of the disclosure.
FIG. 9 illustrates a perspective view of a part of a foldable electronic device in an unfolded state, according to an embodiment of the disclosure.
FIG. 10 illustrates an exploded perspective view of a part of a foldable electronic device in an unfolded state, according to an embodiment of the disclosure.
FIG. 11 illustrates a perspective view showing a first support member, a first protection member, and a second protection member, according to an embodiment of the disclosure.
FIG. 12 illustrates a cross-sectional view of a part of a foldable electronic device in an unfolded state, according to an embodiment of the disclosure.
FIG. 13 illustrates a diagram showing a part of a foldable electronic device in a folded state, according to an embodiment of the disclosure, and a cross-sectional view of a part of the foldable electronic device in a folded state taken along line G-G'.
FIG. 14 illustrates a perspective view showing a first support member, a first protection member, and a second protection member, according to an embodiment of the disclosure.
FIG. 15 illustrates a perspective view showing a first support member, a first rigid portion, and a fifth protection member, according to an embodiment of the disclosure.
FIG. 16 illustrates a perspective view of a part of a foldable electronic device, according to an embodiment of the disclosure.
FIG. 17 illustrates an exploded perspective view of a part of a foldable electronic device, according to an embodiment of the disclosure.
FIG. 18 illustrates a perspective view of a part of a foldable electronic device, according to an embodiment of the disclosure.
FIG. 19 illustrates an exploded perspective view of a part of a foldable electronic device, according to an embodiment of the disclosure.

### [Mode for the Invention]

Hereinafter, various embodiments of the disclosure will be described in detail with reference to the accompanying drawings.

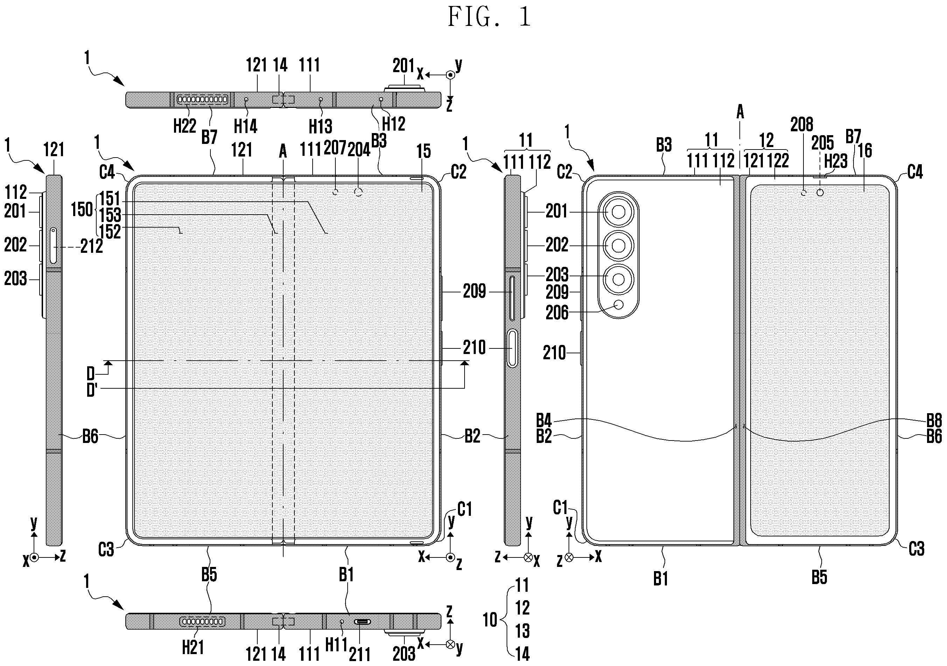

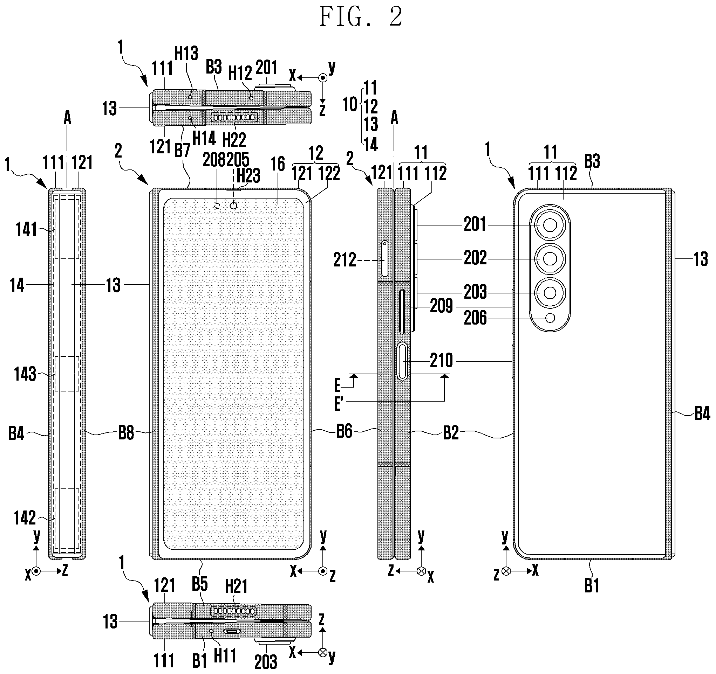

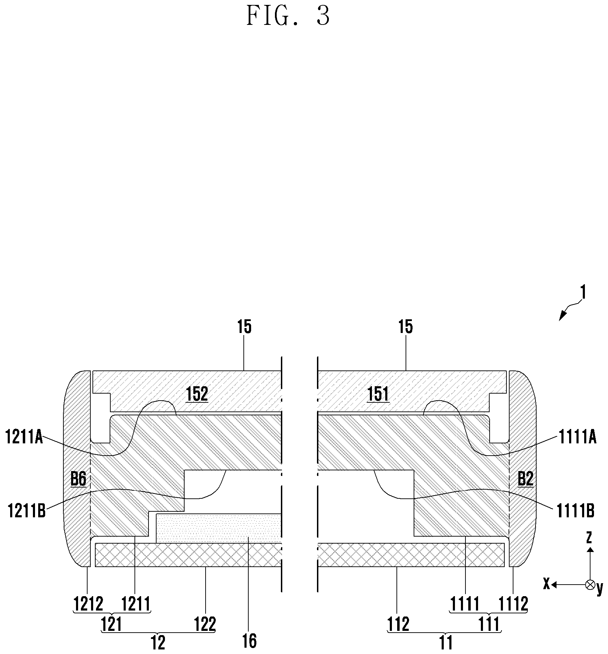

FIG. 1 illustrates a diagram showing appearances of a foldable electronic device 1 in an unfolded state (or referred to as a flat state), according to an embodiment of the disclosure. FIG. 2 illustrates a diagram showing appearances of a foldable electronic device 1 in a folded state (or referred to as a folding state), according to an embodiment of the disclosure. FIG. 3 illustrates a cross-sectional view of the foldable electronic device 1 taken along line D-D' of FIG. 1, according to an embodiment of the disclosure.

With reference to FIGS. 1, 2, and 3, the foldable electronic device 1 may include a foldable housing 10, a first display module 15, a second display module 16, a first camera module 201, a second camera module 202, a third camera module 203, a fourth camera module 204, a fifth camera module 205, a light emitting module 206, a sensor module 207, a first audio input module (not separately shown), a second audio input module (not separately shown), a third audio input module (not separately shown), a fourth audio input module (not separately shown), a first audio output module (not separately shown), a second audio output module (not separately shown), a third audio output module (not separately shown), a key input module, a first connection terminal 211, and/or a second connection terminal 212.

According to an embodiment, the unfolded state and the folded state of the foldable electronic device 1 may be substantially provided by the foldable housing 10. In the disclosure, the 'unfolded state of the foldable electronic device 1' and the 'unfolded state of the foldable housing 10' can be interpreted as being substantially the same. In addition, the 'folded state of the foldable electronic device 1' and the 'folded state of the foldable housing 10' can be interpreted as being substantially the same.

According to an embodiment, the foldable housing 10 may include a first housing 11 (also referred to as a first housing portion or a first housing structure), a second housing 12 (also referred to as a second housing portion or a second housing structure), a hinge housing 13, and/or a hinge portion 14. The first housing 11 and the second housing 12 may be connected through the hinge portion 14. The first housing 11 and the second housing 12 may be mutually rotatable with respect to the hinge portion 14. The hinge portion 14 may include, for example, one or more hinge modules (also referred to as hinge assemblies) (e.g., a first hinge module 141, a second hinge module 142, and/or a third hinge module 143).

According to an embodiment, the first display module 15 may be disposed in the foldable housing 10. The first display module 15 may include, for example, a flexible display module (also referred to as a flexible display) or a foldable display module (also referred to as a foldable display) that can be transformed in response to switching between the unfolded state and the folded state of the foldable electronic device 1.

According to an embodiment, the first display module 15 may include a display area 150. The display area 150 may include an active area or screen area that can display an image based on electrical signals. The display area 150 may include a first display area 151 corresponding to the first housing 11, a second display area 152 corresponding to the second housing 12, and a third display area 153 corresponding to the hinge portion 14. The third display area 153 may extend the first display area 151 and the second display area 152.

According to an embodiment, the first display area 151 may be disposed in the first housing 11. The shape of the first display area 151 may be maintained by support of the first housing 11. For example, the first display area 151 may be supported by the first housing 11 and thus provided (or formed) substantially flat. In this description, when the term "substantially" which qualifies a structural unit is used, the expression containing the term "substantially" is understood or interpreted as a technical feature being produced within the technical tolerance of the method used to manufacture it. In addition, when the expression containing implies that a certain effect or result can be obtained within a certain tolerance and the skilled person knows how to obtain that tolerance.

According to an embodiment, the second display area 152 may be disposed in the second housing 12. The shape of the second display area 152 may be maintained by support of the second housing 12. For example, the second display area 152 may be supported by the second housing 12 and thus provided (or formed) substantially flat.

According to an embodiment, the third display area 153 may be located to correspond to the hinge portion 14. When the foldable electronic device 1 switches between the unfolded state and the folded state, the third display area 153 may be transformed in response to a relative position between the first display area 151 and the second display area 152. In the unfolded state of the foldable electronic device 1, the third display area 153 may be arranged substantially flat. In the folded state of the foldable electronic device 1, the third display area 153 may be arranged in a bent shape. The unfolded state of the foldable electronic device 1 may be defined or interpreted as a state in which the third display area 153 is arranged flat. The folded state of the foldable electronic device 1 may be defined or interpreted as a state in which the third display area 153 is arranged in a bent shape.

According to an embodiment, in the unfolded state of the foldable electronic device 1, the first display area 151 and the second display area 152 may form an angle of about 180 degrees, and the display area 150 may be provided (or arranged) in a substantially flat form. In the unfolded state of the foldable electronic device 1, because of the relative position between the first display area 151 disposed in the first housing 11 and the second display area 152 disposed in the second housing 12, the third display area 153 may be arranged flat. In the unfolded state of the foldable electronic device 1, the third display area 153 may be pulled from both sides by the first display area 151 and the second display area 152, and the pulling force may be applied to flatten the third display area 153 and reduce damage to the third display area 153. The third display area 153 may be provided (or formed) with a width extended enough to be pulled by the first and second display areas 151 and 152 and placed flat while reducing stress in the unfolded state of the foldable electronic device 1.

According to an embodiment, in the unfolded state of the foldable electronic device 1, the hinge portion 14 may support the third display area 153 of the first display module 15 substantially flat. For example, the hinge portion 14 may support the third display area 153 so that the third display area 153 can be placed flat without sagging or with reduced sagging in the unfolded state of the foldable electronic device 1, thereby reducing the crease phenomenon.

According to an embodiment, in the unfolded state of the foldable electronic device 1, when an external force (e.g., an external pressure such as a touch input using a user's finger or an electronic pen) is applied to the third display area 153, the hinge portion 14 may support the third display area 153 so as to reduce the sagging phenomenon of the third display area 153 and maintain the third display area 153 flat.

According to an embodiment, when an external impact is applied due to a reason such as a drop in the unfolded state of the foldable electronic device 1, the hinge portion 14 may be configured to reduce or absorb the external impact so as to reduce the influence of the external impact on the third display area 153.

According to an embodiment, the foldable electronic device 1 may be implemented in an in-folding type that the display area 150 of the first display module 15 (or the front surface of the foldable electronic device 1 where the display area 150 is visible) can be folded inward. FIG. 2 shows a fully folded state of the foldable electronic device 1 in which the first housing 11 and the second housing 12 are disposed to be no longer close to each other. In the fully folded state of the foldable electronic device 1, the first display area 151 and the second display area 152 (or the first front area and the second front area) may face each other. For example, in the fully folded state of the foldable electronic device 1, an angle between the first housing 11 and the second housing 12 (or an angle between the first display area 151 and the second display areas 152, or an angle between the first front area and the second front area) may be from about 0 degrees to about 10 degrees. In the fully folded state of the foldable electronic device 1, the display area 150 may be substantially invisible.

Although not separately shown, the foldable electronic device 1 may be disposed in an intermediate state between the unfolded state and the fully folded state. For example, in the intermediate state of the foldable electronic device 1 where the angle between the first housing 11 and the second housing 12 is more than a certain angle, the foldable electronic device 1 may be configured to provide a usage environment in which the user can use the display area 150.

In the disclosure, the 'folded state of the foldable electronic device 1' may refer to the fully folded state as opposed to the intermediate state.

According to an embodiment, the display area 150 of the first display module 15 may substantially provide (or form) the front surface among the appearances of the foldable electronic device 1. The front surface of the foldable electronic device 1 may include a first front area provided (or formed) by the first display area 151, a second front area provided (or formed) by the second display area 152, and a third front area provided (or formed) by the third display area 153. The coordinate axis of the foldable electronic device 1 is illustrated, for example, based on the first housing 11, and the positive z-axis direction may be defined or interpreted as the direction in which the substantially flat first front area faces. For example, the first front area provided (or formed) by the first display area 151 may be substantially parallel to the x-y plane. In the unfolded state of the foldable electronic device 1, the front surface of the foldable electronic device 1 may be provided (or formed) as substantially flat.

According to an embodiment, when viewed in the unfolded state of the foldable electronic device 1, the display area 150 of the first display module 15 may be provided (or formed) in a symmetrical shape with respect to a first center line A of the foldable electronic device 1. When viewed in the unfolded state of the foldable electronic device 1, the first center line A of the foldable electronic device 1 may correspond to the center of the width of the third display area 153 between the first boundary (formed by the first and third display areas 151 and 153) and the second boundary (formed by the second and third display areas 152 and 153). The depicted positive x-axis may be substantially perpendicular to the first center line A, and the depicted positive y-axis may be substantially parallel to the first center line A.

According to various embodiments, the first center line A of the foldable electronic device 1 may be defined or interpreted as a 'folding axis' of the foldable housing 10 or the foldable electronic device 1. The folding axis may be substantially provided (or formed) by the hinge portion 14.

According to an embodiment, the third display area 153 arranged in a bent shape in the folded state of the foldable electronic device 1 may be provided (or formed) in a substantially symmetrical form with respect to the first center line A of the foldable electronic device 1.

According to an embodiment, when viewed in the unfolded state of the foldable electronic device 1, the display area 150 of the first display module 15 may be substantially rectangular.

According to an embodiment, the first housing 11 may include a first frame 111 (also referred to as a first frame structure or first framework) and a first cover 112 disposed on (or combined with) the first frame 111. A combination of the first frame 111 and the first cover 112 may provide (or form) a first rear area and a first lateral area among the appearances of the foldable electronic device 1. The first frame 111 may provide (or form) at least in part the first lateral area of the foldable electronic device 1. The first cover 112 may provide (or form) at least in part the first rear area of the foldable electronic device 1. The first rear area may face in the direction opposite to the first front area of the foldable electronic device 1 provided (or formed) by the first display area 151 of the first display module 15.

According to an embodiment, the first frame 111 may include a first side 1112 (also referred to as a first lateral member, a first lateral structure, or a first lateral bezel structure). The first side 1112 may surround at least in part a space between the first display area 151 and the first cover 112, and provide (or form) at least in part the first lateral area among the appearances of the foldable electronic device 1.

According to an embodiment, the first frame 111 may include a first support plate 1111 extending from or connected to the first side 1112. The first support plate 1111 may be a structural element located inside the foldable electronic device 1 to correspond to the first housing 11.

According to an embodiment, the first frame 111 may be provided (or formed) as an integrated or single structure (e.g., a single continuous structure or complete structure) including the first support plate 1111 and the first side 1112.

According to an embodiment, the first frame 111 may be provided as a combination of a conductor (or metal) (not separately shown) including one or more conductive portions and a non-conductor (or non-metal) (not separately shown) including one or more non-conductive portions.

According to an embodiment, the first support plate 1111 may be located at least in part between the first display area 151 and the first cover 112. The first display area 151 may be disposed on the first support plate 1111, and the first support plate 1111 may support the first display area 151.

According to an embodiment, various electrical components (not separately shown), such as a first printed circuit board or a first battery, may be at least partially disposed on the first support plate 1111 of the first frame 111 between the first frame 111 and the first cover 112.

According to an embodiment, electrical components or various members associated with the electrical components may be disposed on the first frame 111 or the first support plate 1111 or supported by the first frame 111 or the first support plate 1111. The first support plate 1111 may have, for example, a first support area 1111A (also referred to as a first support surface) and a third support area 1111B (also referred to as a third support surface). The first support area 1111A may substantially face the first display area 151 of the first display module 15. The third support area 1111B may be located on the opposite side to the first support area 1111A. The third support area 1111B may substantially face the first cover 112. Electrical components or various members associated with the electrical components may be disposed on the first support area 1111A and/or the third support area 1111B or supported by the first support area 1111A and/or the third support area 1111B.

According to an embodiment, the second housing 12 may include a second frame 121 (also referred to as a second frame structure or second framework) and a second cover 122 disposed on the second frame 121. A combination of the second frame 121 and the second cover 122 may provide (or form) a second rear area and a second lateral area among the appearances of the foldable electronic device 1. The second frame 121 may provide (or form) at least in part the second lateral area of the foldable electronic device 1. The second cover 122 may provide (or form) at least in part the second rear area of the foldable electronic device 1. The second rear area may face in the direction opposite to the second front area of the foldable electronic device 1 provided (or formed) by the second display area 152.

According to an embodiment, the second frame 121 may include a second side 1212 (also referred to as a second lateral member, a second lateral structure, or a second lateral bezel structure). The second side 1212 may surround at least in part a space between the second display area 152 and the second cover 122, and provide (or form) at least in part the second lateral area among the appearances of the foldable electronic device 1.

According to an embodiment, the second frame 121 may include a second support plate 1211 extending from or connected to the second side 1212. The second support plate 1211 may be a structural element located inside the foldable electronic device 1 to correspond to the second housing 12.

According to an embodiment, the second frame 121 may be provided as an integrated or single structure (e.g., a single continuous structure or complete structure) including the second support plate 1211 and the second side 1212.

According to an embodiment, the second frame 121 may be provided as a combination of a conductor (or metal) (not separately shown) including one or more conductive portions and a non-conductor (or non-metal) (not separately shown) including one or more non-conductive portions.

According to an embodiment, the second support plate 1211 may be located at least in part between the second display area 152 and the second cover 122. The second display area 152 may be disposed on the second support plate 1211, and the second support plate 1211 may support the second display area 152.

According to an embodiment, various electrical components (not separately shown), such as a second printed circuit board or a second battery, may be at least partially disposed on the second support plate 1211 of the second frame 121 between the second frame 121 and the second cover 122.

According to an embodiment, electrical components or various members associated with the electrical components may be disposed on the second frame 121 or the second support plate 1211 or supported by the second frame 121 or the second support plate 1211. The second support plate 1211 may have, for example, a second support area 1211A (also referred to as a second support surface) and a fourth support area 1211B (also referred to as a fourth support surface). The second support area 1211A may substantially face the second display area 152 of the second display module 15. The fourth support area 1211B may be located on the opposite side to the second support area 1211A. The fourth support area 1211B may substantially face the second cover 122. Electrical components or various members associated with the electrical components may be disposed on the second support area 1211A and/or the fourth support area 1211B or supported by the second support area 1211A and/or the fourth support area 1211B.

According to an embodiment, the first side 1112 of the first frame 111 may include a first lateral portion B1, a second lateral portion B2, a third lateral portion B3, and/or a fourth lateral portion B4. The first lateral portion B1 may extend in a direction perpendicular to the first center line A of the foldable electronic device 1. The third lateral portion B3 may be spaced apart from the first lateral portion B1 in the direction of the first center line A of the foldable electronic device 1 and may be substantially parallel to the first lateral portion B1. The second lateral portion B2 may extend between (or connect) one end of the first lateral portion B1 and one end of the third lateral portion B3. The fourth lateral portion B4 may extend between (or connect) the other end of the first lateral portion B1 and the other end of the third lateral portion B3. The second lateral portion B2 and the fourth lateral portion B4 may be substantially parallel to each other. The fourth lateral portion B4 may be located closer to the first center line A of the foldable electronic device 1 than the second lateral portion B2.

According to an embodiment, a first corner C1 where the first lateral portion B1 and the second lateral portion B2 are connected, and/or a second corner C2 where the second lateral portion B2 and the third lateral portion B3 are connected may be provided (or formed) in a smooth curved shape.

According to an embodiment, when viewed from above the first cover 112, the first lateral portion B1, the second lateral portion B2, the third lateral portion B3, and the fourth lateral portion B4 may surround the first cover 112.

According to an embodiment, the second side 1212 of the second frame 121 may include a fifth lateral portion B5, a sixth lateral portion B6, a seventh lateral portion B7, and/or an eighth lateral portion B8. The fifth lateral portion B5 may extend in a direction perpendicular to the first center line A of the foldable electronic device 1. The seventh lateral portion B7 may be spaced apart from the fifth lateral portion B5 in the direction of the first center line A of the foldable electronic device 1 and may be substantially parallel to the fifth lateral portion B5. The sixth lateral portion B6 may extend between (or connect) one end of the fifth lateral portion B5 and one end of the seventh lateral portion B7. The eighth lateral portion B8 may extend between (or connect) the other end of the fifth lateral portion B5 and the other end of the seventh lateral portion B7. The sixth lateral portion B6 and the eighth lateral portion B8 may be substantially parallel to each other. The eighth lateral portion B8 may be located closer to the first center line A of the foldable electronic device 1 than the sixth lateral portion B6.

According to an embodiment, a third corner C3 where the fifth lateral portion B5 and the sixth lateral portion B6 are connected, and/or a fourth corner C4 where the sixth lateral portion B6 and the seventh lateral portion B7 are connected may be provided (or formed) in a smooth curved shape.

According to an embodiment, when viewed from above the second cover 122, the fifth lateral portion B5, the sixth lateral portion B6, the seventh lateral portion B7, and the eighth lateral portion B8 may surround the second cover 122.

According to an embodiment, in the folded state of the foldable electronic device 1, the first side 1112 of the first frame 111 and the second side 1212 of the second frame 121 may be aligned and overlap with each other. In the folded state of the foldable electronic device 1, the first lateral portion B1 and the fifth lateral portion B5 may be aligned and overlap with each other. In the folded state of the foldable electronic device 1, the second lateral portion B2 and the sixth lateral portion B6 may be aligned and overlap with each other. In the folded state of the foldable electronic device 1, the third lateral portion B3 and the seventh lateral portion B7 may be aligned and overlap with each other.

According to an embodiment, the first lateral portion B1, the second lateral portion B2, and the third lateral portion B3 may become a one-side bezel (or screen bezel) surrounding one area of the first display module 15 with respect to the first center line A of the foldable electronic device 1. The fifth lateral portion B5, the sixth lateral portion B6, and the seventh lateral portion B7 may become the other-side bezel (or screen bezel) surrounding the other area of the first display module 15 with respect to the first center line A of the foldable electronic device 1.

According to an embodiment, the fourth lateral portion B4 and the eighth lateral portion B8 may be located on opposite sides of the third display area 153. When viewed from above the front surface of the foldable electronic device 1 in the unfolded state, the fourth lateral portion B4 and the eighth lateral portion B8 may not be visible.

According to an embodiment, the hinge housing 13 (also referred to as a hinge cover) may be connected to one or more hinge modules included in the hinge portion 14 (e.g., the first hinge module 141, the second hinge module 142, and the third hinge module 143).

According to an embodiment, when the foldable electronic device 1 switches from the unfolded state to the folded state, the gap between the first frame 111 and the second frame 121 on opposite sides of the third display area 153 can be opened due to a change in the relative position between the first and second frames 111 and 121 connected through the hinge portion 14 and a change in the state of the hinge portion 14 combined with the hinge housing 13. The hinge housing 13 may be exposed to the outside through the open gap. For example, in the folded state of the foldable electronic device 1, the hinge housing 13 may be exposed to the outside through the open gap between the fourth lateral portion B4 of the first frame 111 and the eighth lateral portion B8 of the second frame 121. The width of the gap between the fourth lateral portion B4 of the first frame 111 and the eighth lateral portion B8 of the second frame 121 may vary depending on an angle between the first frame 111 and the second frame 121. The hinge housing 13 may be exposed to the outside to a greater extent in the folded state of the foldable electronic device 1 than in the intermediate state of the foldable electronic device 1. In the folded state of the foldable electronic device 1, the hinge housing 13 may become a part of the appearances that cover the interior of the foldable electronic device 1. In the folded state of the foldable electronic device 1, the lateral surface of the foldable electronic device 1 may include a first lateral area provided by the first side 1112 of the first frame 111, a second lateral area provided by the second side 1212 of the second frame 121, and a third lateral area provided by the hinge housing 13.

According to an embodiment, when the foldable electronic device 1 switches from the folded state to the unfolded state, the gap between the first frame 111 and the second frame 121 on opposite sides of the third display area 153 can be closed due to a change in the relative position between the first and second frames 111 and 121 connected through the hinge portion 14 and a change in the state of the hinge portion 14 combined with the hinge housing 13. For example, in the unfolded state of the foldable electronic device 1, the gap between the fourth lateral portion B4 of the first frame 111 and the eighth lateral portion B8 of the second frame 121 may be closed, and the hinge housing 13 may not be exposed to the outside.

According to an embodiment, the second display module 16 (also referred to as the second display) may be located between the second cover 122 and the second support plate 1211 of the second frame 121. The second display module 16 may be disposed on or combined with the second cover 122 and/or the second support plate 1211. The display area of the second display module 16 may be visible through the second cover 122.

According to an embodiment, the foldable electronic device 1 may be configured to display an image through the second display module 16 instead of the first display module 15 in the folded state.

According to an embodiment, the first camera module 201, the second camera module 202, the third camera module 203, the fourth camera module 204, and/or the fifth camera module 205 may include one or more lenses, image sensor(s), and/or an image signal processor (ISP).

According to an embodiment, the first camera module 201, the second camera module 202, and the third camera module 203 may be accommodated in the first housing 11 to correspond to the first cover 112 (or the first rear area of the foldable electronic device 1). For example, the first cover 112 may have a first camera hole (or first light transmission region) corresponding to the first camera module 201, a second camera hole (or a second light transmission region) corresponding to the second camera module 202, and/or a third camera hole (or a third light transmission area) corresponding to the third camera module 203. The locations or number of camera modules accommodated in the first housing 11 to correspond to the first cover 112 are not limited to the illustrated example and may vary.

According to an embodiment, the first camera module 201 (also referred to as a first camera, a first rear camera module, or a first rear camera), the second camera module 202 (also referred to as a second camera, a second rear camera module, or a second rear camera), or the third camera module 203 (also referred to as a third camera, a third rear camera module, or a third rear camera) may include a wide-angle camera module, a telephoto camera module, a color camera module, a monochrome camera module, or an IR camera (e.g., a time of flight (TOF) camera, a structured light camera) module.

According to an embodiment, the first camera module 201, the second camera module 202, and the third camera module 203 may have different properties (e.g., angle of view) or functions.

According to various embodiments, the first camera module 201, the second camera module 202, or the third camera module 203 may provide different angles of view (or lenses of different angles of view). The foldable electronic device 1 may selectively use the angle of view of the first camera module 201, the second camera module 202, or the third camera module 203 based on a user's selection regarding the angle of view.

According to an embodiment, the fourth camera module 204 may be accommodated in the first housing 11 to correspond to the first front area of the foldable electronic device 1.

According to an embodiment, the fourth camera module 204 (also referred to as a fourth camera, a first front camera module, or a first front camera) may overlap with the first display area 151 of the first display module 15 when viewed from above the first front area of the foldable electronic device 1. The fourth camera module 204 may be located on the rear surface of the first display area 151 or under the first display area 151. When viewed from the outside of the foldable electronic device 1, the fourth camera module 204, or the position of the fourth camera module 204, may not be substantially visually distinguished (or exposed). The fourth camera module 204 may include, for example, a hidden display rear camera (e.g., an under display camera (UDC)). External light may pass through the first display module 15 and reach the fourth camera module 204.

According to various embodiments, although not separately shown, the fourth camera module 204 may be accommodated in the second housing 12 to correspond to the second front area of the foldable electronic device 1.

According to various embodiments, although not separately shown, an additional camera module (not separately shown) may be accommodated in the second housing 12 to correspond to the second front area of the foldable electronic device 1.

According to an embodiment, the fifth camera module 205 may be accommodated in the second housing 12 to correspond to the second cover 122 (or the second rear area of the foldable electronic device 1).

According to an embodiment, the fifth camera module 205 may be located in alignment with an opening provided in the second display module 16 or may be at least partially inserted into the opening. External light may pass through the opening provided in the second cover 122 and the second display module 16 and reach the fifth camera module 205. The opening of the second display module 16 aligned with or overlapping with the fifth camera module 205 may be a through-hole. In various embodiments, the opening of the second display module 16 aligned with or overlapping with the fifth camera module 205 may be provided as a notch (not separately shown).

According to various embodiments, the fifth camera module 205 (also referred to as a fifth camera, a second front camera module, or a second front camera) may overlap with the second display module 16 when viewed from above the second rear area of the foldable electronic device 1. The fifth camera module 205 may be located on the rear surface of the second display module 16 or under the second display module 16. When viewed from the outside of the foldable electronic device 1, the fifth camera module 205, or the position of the fifth camera module 205, may not be substantially visually distinguished (or exposed). The fifth camera module 205 may include, for example, a hidden display rear camera (e.g., UDC). External light may pass through the second cover 122 and the second display module 16 and reach the fifth camera module 205.

According to various embodiments, the first camera module 201, the second camera module 202, the third camera module 203, the fourth camera module 204, or the fifth camera module 205 may be operated as at least part of the sensor module. For example, an IR camera module may operate as at least part of the sensor module.

According to an embodiment, the light emitting module 206 may be accommodated in the first housing 11 to corresponding to the first cover 112 (or the first rear area of the foldable electronic device 1). The first cover 112 may have a flash hole (or fourth light transmission region) corresponding to the light emitting module 206. The light emitting module 206 may include, for example, an LED or a xenon lamp. The light emitting module 206 may include a light source for the first camera module 201, the second camera module 202, and/or the third camera module 203.

According to various embodiments, the foldable electronic device 1 may further include another light emitting module (not separately shown) accommodated in the foldable housing 10 to correspond to the front surface of the foldable electronic device 1. The light emitting module can provide status information of the foldable electronic device 1 in the form of light. In various embodiments, the light emitting module may provide a light source linked to the operation of the fourth camera module 204.

According to an embodiment, the sensor module 207 may be accommodated in the foldable housing 10 to correspond to the front surface of the foldable electronic device 1.

According to an embodiment, the sensor module 207 may include an optical sensor module. The optical sensor module may include, for example, a proximity sensor module or an illuminance sensor module.

According to an embodiment, the sensor module 207 may overlap with the first display area 151 of the first display module 15 when viewed from above the first front area of the foldable electronic device 1. The sensor module 207 may be located on the rear surface of the first display area 151 or under the first display area 151. When viewed from the outside of the foldable electronic device 1, the sensor module 207, or the location of the sensor module 207, may not be substantially visually distinguished (or exposed). External light may pass through the first display module 15 and reach the sensor module 207.

According to various embodiments, the foldable electronic device 1 may further include various other sensor modules (e.g., a biometric sensor module) (not separately shown).

According to an embodiment, the first audio input module may include a first microphone (also referred to as a first mike) (not separately shown). The second audio input module may include a second microphone (also referred to as a second mike) (not separately shown). The third audio input module may include a third microphone (also referred to as a third mike) (not separately shown). The fourth audio input module may include a fourth microphone (also referred to as a fourth mike) (not separately shown). For example, the first microphone may be accommodated in the first housing 11 to correspond to a first microphone hole H11 included in the first lateral portion B1 of the first side 1112. For example, the second microphone may be accommodated in the first housing 11 to correspond to a second microphone hole H12 included in the third lateral portion B3 of the first side 1112. For example, the third microphone may be accommodated in the first housing 11 to correspond to a third microphone hole H13 included in the third lateral portion B3 of the first side 1112. For example, the fourth microphone may be accommodated in the second housing 12 to correspond to a fourth microphone hole H14 included in the seventh lateral portion B7 of the second side 1212. The locations or number of the microphones and corresponding microphone holes are not limited to the illustrated example and may vary.

According to an embodiment, the first audio output module may include a first speaker (not separately shown). The second audio output module may include a second speaker (not separately shown). The first speaker or the second speaker may be a speaker for multimedia playback or recording playback. For example, the first speaker may be accommodated in the second housing 12 to correspond to a first speaker hole H21 included in the second side 1212. For example, the second speaker may be accommodated in the second housing 12 to correspond to a second speaker hole H21 provided in the second side 1212. The locations or number of the speakers for multimedia playback or recording playback and corresponding speaker holes are not limited to the illustrated example and may vary.

According to an embodiment, the third audio output module may include a third speaker (not separately shown). The third speaker may include a receiver for calls. For example, the third speaker may be accommodated in the second housing 12 to correspond to a third speaker hole H23 provided between the second cover 122 and the seventh lateral portion B7 of the second side 1212. The locations or number of the speakers for calls and corresponding speaker holes are not limited to the illustrated example and may vary.

According to an embodiment, the key input module may include a first key 209 (also referred to as a first side key), a second key 210 (also referred to as a second side key), and/or a key signal generator (not separately shown). For example, the first key 209 may be located in a first key hole included in the second lateral portion B2 of the first side 1112, and the second key 210 may be located in a second key hole included in the second lateral portion B2 of the first side 1112. The key signal generator may be configured to generate a first key signal in response to a press or touch on the first key 209, and a second key signal in response to a press or touch on the second key 210. The locations or number of key input modules are not limited to the illustrated example and may vary.

According to an embodiment, the first connection terminal 211 (also referred to as a first connector or a first interface terminal) may be accommodated in the first housing 11 to correspond to a first connection terminal hole (e.g., a first connector hole) included in the first lateral portion B1 of the first side 1112. The foldable electronic device 1 may transmit and/or receive power and/or data to and from an external electronic device electrically connected to the first connection terminal 211. The first connection terminal 211 may include, for example, a USB connector or an HDMI connector. The locations of the first connection terminal 211 and corresponding first connection terminal hole are not limited to the illustrated example and may vary.

According to an embodiment, the second connection terminal 212 (referred to as a second connector or a second interface terminal) may be accommodated in the second housing 12 to correspond to a second connection terminal hole (e.g., a second connector hole) included in the sixth lateral portion B6 of the second side 1212. An external storage medium such as a secure digital memory (SD) card, a SIM card, or a universal SIM (USIM) may be connected to the second connection terminal 212. The locations of the second connection terminal 212 and corresponding second connection terminal hole are not limited to the illustrated example and may vary.

The foldable electronic device 1 may further include various components depending on its provided form. These components cannot all be listed as their variations vary according to the convergence trend of the foldable electronic device 1, but components equivalent to the above-mentioned components may be further included in the foldable electronic device 1. In various embodiments, depending on provided forms, certain components may be excluded from the above-mentioned components or replaced with other components.

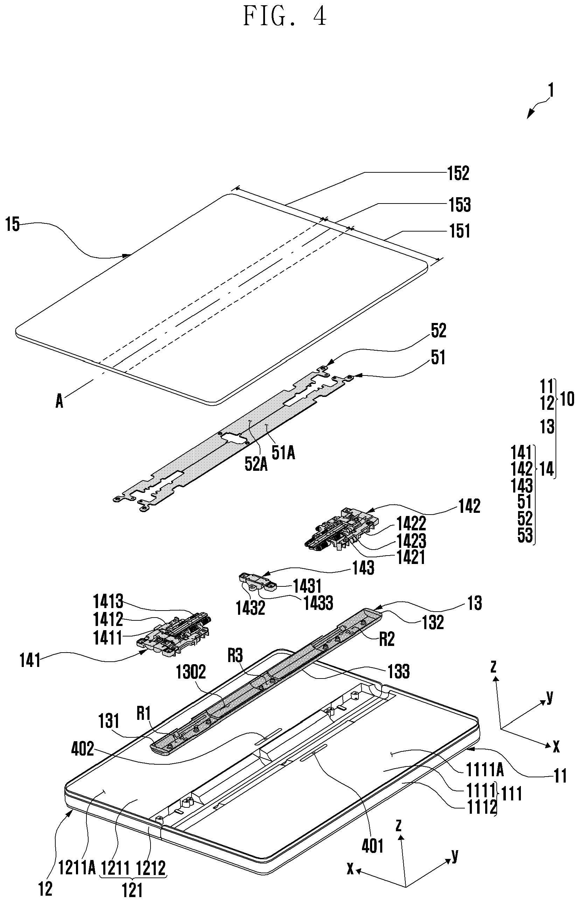

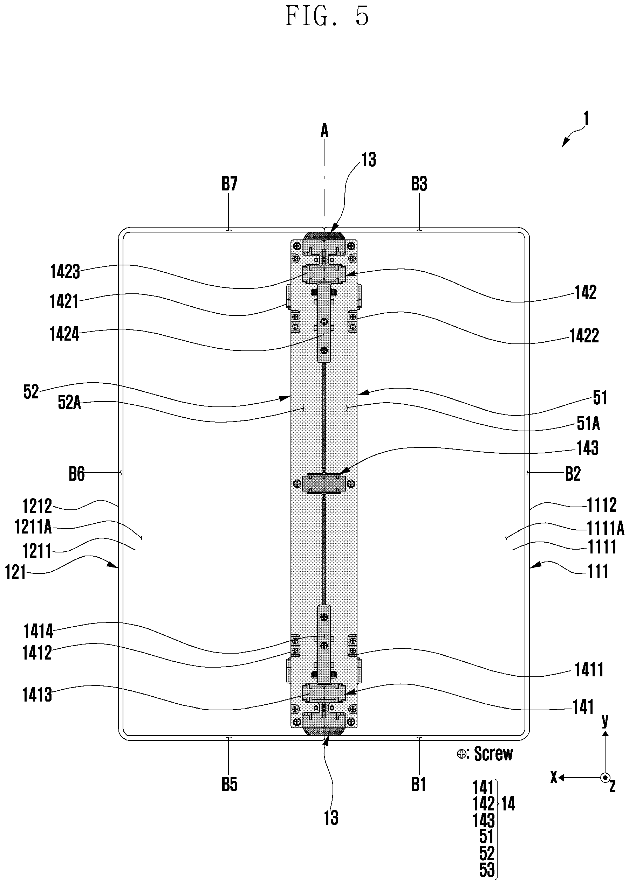

FIG. 4 illustrates an exploded perspective view of a part of a foldable electronic device 1 in an unfolded state, according to an embodiment of the present disclosure. FIG. 5 illustrates a diagram showing a part of a foldable electronic device 1 in an unfolded state, according to an embodiment of the disclosure.

With reference to FIGS. 4 and 5, the foldable electronic device 1 may include the foldable housing 10 and the first display module 15. The descriptions of some components that have the same reference numerals as those shown in FIGS. 1, 2, and 3 will be omitted.

According to an embodiment, the foldable housing 10 may include the first housing 11, the second housing 12, the hinge housing 13, and/or the hinge portion 14.

According to an embodiment, the first housing 11 may include the first frame 111. The first frame 111 may include the first support plate 1111 and the first side 1112.

According to an embodiment, the first support area 1111A of the first support plate 1111 may include a first front mounting portion for stably placing or supporting one or more components such as the first display area 151 of the first display module 15. The first front mounting portion may be formed, for example, by a combination of surface regions of different heights.

According to an embodiment, the third support area 1111B (see FIG. 3) of the first support plate 1111 may include a first rear mounting portion for stably placing or supporting one or more components such as a first printed circuit board (not separately shown) and/or a first battery (not separately shown). The first rear mounting portion may be formed, for example, by a combination of surface regions of different heights.

According to an embodiment, the second housing 12 may include the second frame 121. The second frame 121 may include the second support plate 1211 and the second side 1212.

According to an embodiment, the second support area 1211A of the second support plate 1211 may include a second front mounting portion for stably placing or supporting one or more components such as the second display area 152 of the first display module 15. The second front mounting portion may be formed, for example, by a combination of surface regions of different heights.

According to an embodiment, the fourth support area 1211B (see FIG. 3) of the second support plate 1211 may include a second rear mounting portion for stably placing or supporting one or more components such as a second printed circuit board (not shown separately) and/or a second battery (not shown separately). The second rear mounting portion may be formed, for example, by a combination of surface regions of different heights.

According to an embodiment, through an adhesive material (or glue material), the first display area 151 of the first display module 15 may be disposed on the first support area 1111A of the first support plate 1111, and the second display area 152 of the first display module 15 may be disposed on the second support area 1211A of the second support plate 1211. The adhesive material (or glue material) may include, for example, a heat-reactive adhesive material (or heat-reactive glue material), a photo-reactive adhesive material (or photo-reactive glue material), a general adhesive (or general glue), and/or a double-sided tape.

According to an embodiment, the hinge housing 13 may include a first sidewall 131 (also referred to as a first end) and a second sidewall 132 (also referred to as a second end). The hinge housing 13 may extend from the first sidewall 131 to the second sidewall 132 in the direction of the first center line A of the foldable electronic device 1.

According to an embodiment, the first sidewall 131 and the second sidewall 132 of the hinge housing 13 may be substantially perpendicular to the direction of the first center line A of the foldable electronic device 1, and may be spaced apart from each other in the direction of the first center line A of the foldable electronic device 1.

According to an embodiment, the first sidewall 131 and the second sidewall 132 of the hinge housing 13 may be provided (or formed) to be convex in opposite directions.

According to an embodiment, the first sidewall 131 and the second sidewall 132 of the hinge housing 13 may be provided (or formed) substantially symmetrical to each other on opposite sides.

According to an embodiment, the first sidewall 131 of the hinge housing 13 may be located to correspond to the first lateral portion B1 of the first frame 111 and the fifth lateral portion B5 of the second frame 121. In the unfolded state of the foldable electronic device 1, the first sidewall 131 may be hidden by the first lateral portion B1 of the first frame 111 and the fifth lateral portion B5 of the second frame 121. In the folded state of the foldable electronic device 1, the first sidewall 131 may be exposed to the outside through an opened gap between the first lateral portion B1 of the first frame 111 and the fifth lateral portion B5 of the second frame 121.

According to an embodiment, the second sidewall 132 of the hinge housing 13 may be located to correspond to the third lateral portion B3 of the first frame 111 and the seventh lateral portion B7 of the second frame 121. In the unfolded state of the foldable electronic device 1, the second sidewall 132 may be hidden by the third lateral portion B3 of the first frame 111 and the seventh lateral portion B7 of the second frame 121. In the folded state of the foldable electronic device 1, the second sidewall 132 may be exposed to the outside through an opened gap between the third lateral portion B3 of the first frame 111 and the seventh lateral portion B7 of the second frame 121.

According to an embodiment, a portion between the first and second sidewalls 131 and 132 of the hinge housing 13 (hereinafter referred to as a 'sidewall extension 133') may extend or connect the first sidewall 131 and the second sidewall 132. The sidewall extension 133 may be exposed to the outside through an opened gap between the fourth lateral portion B4 of the first frame 111 and the eighth lateral portion B8 of the second frame 121 in the folded state of the foldable electronic device 1. In the unfolded state of the foldable electronic device 1, the gap between the fourth lateral portion B4 of the first frame 111 and the eighth lateral portion B8 of the second frame 121 may be closed, and the sidewall extension 133 may not be exposed to the outside.

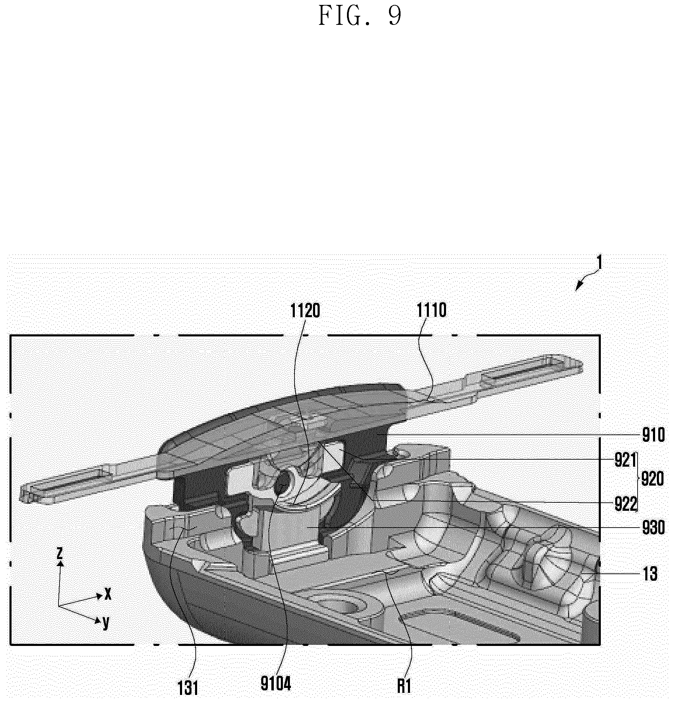

According to an embodiment, the hinge housing 13 may have a third surface (e.g., the third surface 1301 in FIG. 9) and a fourth surface 1302 provided through a combination of the first sidewall 131, the second sidewall 132, and the sidewall extension 133. The third surface may include an area exposed to the outside in the folded state of the foldable electronic device 1. The fourth surface 1302 may be disposed on the opposite side from the third surface. The fourth surface 1302 may include a mounting portion configured to stably place and support the first hinge module 141, the second hinge module 142, and the third hinge module 143. The mounting portion may be provided by a combination of surface regions of different heights. For example, the mounting portion have a first recess R1 corresponding to the first hinge module 141, a second recess R2 corresponding to the second hinge module 142, and a third recess R3 corresponding to the third hinge module 143.

According to an embodiment, the hinge housing 13 may be combined with the hinge portion 14. For example, the hinge housing 13 may be connected to the first frame 111 of the first housing 11 and the second frame 121 of the second housing 12 through the hinge portion 14. In switching between the unfolded state and the folded state of the foldable electronic device 1, when viewed in the direction of the first center line A of the foldable electronic device 1, the first and second housings 11 and 12 connected through the hinge portion 14 may be rotated in different directions with respect to the hinge portion 14. In the unfolded state of the foldable electronic device 1, the hinge housing 13 may be hidden by the first frame 111 of the first housing 11 and the second frame 121 of the second housing 12. In the folded state of the foldable electronic device 1, the hinge housing 13 may be exposed to the outside between the first frame 111 of the first housing 11 and the second frame 121 of the second housing 12.

According to an embodiment, the hinge housing 13 may be defined or interpreted as a component included in the hinge portion 14.

According to an embodiment, the hinge portion 14 may include the first hinge module 141 (also referred to as a first hinge assembly), the second hinge module 142 (also referred to as a second hinge assembly), the third hinge module 143 (also referred to as a third hinge assembly), a first plate 51 (also referred to as a first wing plate), and/or a second plate 52 (also referred to as a second wing plate).

According to an embodiment, the first hinge module 141, the second hinge module 142, and the third hinge module 143 may connect the first frame 111 and the second frame 121. The first frame 111 and the second frame 121 may be rotatably connected to each other through the first hinge module 141, the second hinge module 142, and the third hinge module 143.

According to an embodiment, the first hinge module 141, the second hinge module 142, and the third hinge module 143 may be disposed along the first center line A of the foldable electronic device 1, and the third hinge module 143 may be positioned between the first hinge module 141 and the second hinge module 142.

According to an embodiment, the third hinge module 143 may be located to correspond to the center between the first and second hinge modules 141 and 142 (e.g., a point on the first center line A that is substantially the same distance from the first and second hinge modules 141 and 142).

According to an embodiment, the first hinge module 141 may include a first bracket 1411, a second bracket 1412, and/or a first bracket connector 1413. The first bracket 1411 may be disposed on or combined with the first support area 1111A of the first frame 111 through, for example, screw fastening. The second bracket 1412 may be disposed on or combined with the second support area 1211A of the second frame 121 through, for example, screw fastening. The first bracket connector 1413 may connect the first bracket 1411 and the second bracket 1412. The first bracket 1411 and the second bracket 1412 may be rotatable with respect to the first bracket connector 1413.

According to an embodiment, the first bracket connector 1413 of the first hinge module 141 may be configured such that the first frame 111 to which the first bracket 1411 of the first hinge module 141 is fixed and the second frame 121 to which the second bracket 1412 of the first hinge module 141 is fixed can be rotated in opposite directions at substantially the same angle.

According to an embodiment, the first bracket connector 1413 of the first hinge module 141 may be configured such that the first frame 111 to which the first bracket 1411 of the first hinge module 141 is fixed and the second frame 121 to which the second bracket 1412 of the first hinge module 141 is fixed can be rotated at a designated angle and then maintained. The first bracket connector 1413 may have, for example, a free-stop function.

According to an embodiment, the first bracket connector 1413 of the first hinge module 141 may be configured to provide a force that allows the first frame 111, to which the first bracket 1411 of the first hinge module 141 is fixed, and the second frame 121, to which the second bracket 1412 of the first hinge module 141 is fixed, to be rotated relative to each other. Although not separately shown, the first bracket connector 1413 may be composed of, for example, a combination of at least one shaft, at least one cam gear, and/or at least one compression spring that provides elasticity.

According to an embodiment, the first bracket connector 1413 of the first hinge module 141 may be combined with the hinge housing 13. The first bracket connector 1413 may be combined with the hinge housing 13 through, for example, screw fastening.

According to an embodiment, the first bracket connector 1413 of the first hinge module 141 may be placed in or combined with the first recess R1 of the hinge housing 13 through screw fastening.

According to an embodiment, the second hinge module 142 may be provided at least in part or substantially the same as the first hinge module 141. The second hinge module 142 may include, for example, a third bracket 1421 (e.g., the first bracket 1411), a fourth bracket 1422 (e.g., the second bracket 1412), and/or a second bracket connector 1423 (e.g., the first bracket connector 1413). In an embodiment, the second hinge module 142 may be disposed in the foldable electronic device 1 in an arrangement direction opposite to that of the first hinge module 141. The third bracket 1421 of the second hinge module 142 may be disposed on or combined with the second support area 1211A of the second frame 121, and the fourth bracket 1422 of the second hinge module 142 may be disposed on or combined with the first support area 1111A of the first frame 111.

According to an embodiment, the second bracket connector 1423 of the second hinge module 142 may be combined with the hinge housing 13. The second bracket connector 1423 may be combined with the hinge housing 13 through, for example, screw fastening.

According to an embodiment, the second bracket connector 1423 of the second hinge module 142 may be disposed in or combined with the second recess R2 of the hinge housing 13 through screw fastening.

According to an embodiment, the third hinge module 143 may include a guide rail assembly or a rotational motion guide. The third hinge module 143 may include, for example, a first slider 1431, a second slider 1432, and a guide rail 1433. The first slider 1431 may be connected to the guide rail 1433 to be able to slide with respect to the guide rail 1433. The second slider 1432 may be connected to the guide rail 1433 to be able to slide with respect to the guide rail 1433. The guide rail 1433 may include a first guide rail in a sliding pair relationship with the first slider 1431, and a second guide rail in a sliding pair relationship with the second slider 1432.

According to an embodiment, the guide rail 1433 of the third hinge module 143 may be combined with the hinge housing 13. The guide rail 1433 may be combined with the hinge housing 13 through, for example, screw fastening.

According to an embodiment, the guide rail 1433 of the third hinge module 143 may be disposed in or combined with the third recess R3 of the hinge housing 13 through screw fastening.

According to various embodiments, although not separately shown, the first hinge module 141, the second hinge module 142, and/or the third hinge module 143 are not limited to the illustrated example and may be provided in various other forms.

According to an embodiment, the first plate 51 may be located to correspond to the first frame 111 of the first housing 11, and the second plate 52 may be located to correspond to the second frame 121 of the second housing 12. The first plate 51 and the second plate 52 may be positioned on both sides of the first center line A of the foldable electronic device 1, respectively. The first plate 51 and the second plate 52 may have a first width in a direction (e.g., the y-axis direction) of the first center line A of the foldable electronic device 1 greater than a second width in a direction perpendicular to the direction. The first and second plates 51 and 52 may extend from the first hinge module 141 to the second hinge module 142 across the third hinge module 143. With respect to the first center line A of the foldable electronic device 1, one side of the first, second, and third hinge modules 141, 142, and 143 may disposed between the first plate 51 and the first support plate 1111 of the first frame 111, and the other side of the first, second, and third hinge modules 141, 142, and 143 may be disposed between the second plate 52 and the second support plate 1211 of the second frame 121.

According to an embodiment, the first and second plates 51 and 52 may be connected to the first hinge module 141, the second hinge module 142, and the third hinge module 143. The first and second plates 51 and 52 may be combined with the first hinge module 141, the second hinge module 142, and the third hinge module 143 through, for example, screw fastening.

According to an embodiment, the hinge portion 14 may be configured such that the first and second plates 51 and 52 flatly support the third display area 153 of the first display module 15 in the unfolded state of the foldable electronic device 1.

According to an embodiment, the first plate 51 may include a first display support surface 51A provided to correspond to the third display area 153 of the first display module 15. The second plate 52 may include a second display support surface 52A provided to correspond to the third display area 153 of the first display module 15. The first display support surface 51A and the second display support surface 52A can flatly support the third display area 153 with respect to the first display area 151 and the second display area 152 in the unfolded state of the foldable electronic device 1. The first display support surface 51A may have a flat surface that can flatly support one area of the third display area 153 with respect to the first center line A of the foldable electronic device 1 in the unfolded state of the foldable electronic device 1. The second display support surface 52A of the second plate 52 may have a flat surface that can flatly support the other area of the third display area 153 with respect to the first center line A of the foldable electronic device 1 in the unfolded state of the foldable electronic device 1.

According to an embodiment, in the unfolded state of the foldable electronic device 1, the first display support surface 51A of the first plate 51 and the second display support surface 52A of the second plate 52 may substantially form an angle of about 180 degrees and be arranged without substantial height difference. In the unfolded state of the foldable electronic device 1, even if an external force (e.g., external pressure such as a touch input using a user's finger or an electronic pen) is applied to the third display area 153, the third display area 153 can be maintained flat because of the support of the first and second plates 51 and 52.

According to an embodiment, the first bracket connector 1413 of the first hinge module 141 may include a first center plate 1414 aligned to correspond to the first center line A of the foldable electronic device 1. The second bracket connector 1423 of the second hinge module 142 may include a second center plate 1424 aligned to correspond to the first center line A of the foldable electronic device 1. In the unfolded state of the foldable electronic device 1, the first center plate 1414 and the second center plate 1424 may support a partial area corresponding to a gap between the first display support surface 51A of the first plate 51 and the second display support surface 52A of the second plate 52 in the third display area 153 of the first display module 15. In the unfolded state of the foldable electronic device 1, the first center plate 1414 and the second center plate 1424 may reduce or prevent the sagging or crease phenomenon of a partial area corresponding to a gap between the first display support surface 51A of the first plate 51 and the second display support surface 52A of the second plate 52 in the third display area 153.

According to an embodiment, in the unfolded state of the foldable electronic device 1, the third hinge module 143 may support a partial area corresponding to a gap between the first display support surface 51A of the first plate 51 and the second display support surface 52A of the second plate 52 in the third display area 153 of the first display module 15.

According to an embodiment, in the folded state of the foldable electronic device 1, the first plate 51 and the second plate 52 may face each other and be spaced apart from each other. In the folded state of the foldable electronic device 1, the third display area 153 of the first display module 15 may be bent and positioned between the first plate 51 and the second plate 52.

According to an embodiment, the hinge portion 14 may be configured such that the relative position of the first plate 51 with respect to the first frame 111 is changed and the relative position of the second plate 52 with respect to the second frame 121 is changed in switching between the unfolded state and the folded state of the foldable electronic device 1.

According to an embodiment, the hinge portion 14 may be configured such that the first plate 51 and the second plate 52 are substantially parallel in the folded state of the foldable electronic device 1. In the folded state of the foldable electronic device 1, the first display support surface 51A of the first plate 51 and the second display support surface 52A of the second plate 52 may face each other and be substantially parallel.

According to an embodiment, the hinge portion 14 may be configured such that the first plate 51 and the second plate 52 form an acute angle in the folded state of the foldable electronic device 1. In the folded state of the foldable electronic device 1, the space between the first display support surface 51A of the first plate 51 and the second display support surface 52A of the second plate 52 may be provided in a shape widened toward the hinge housing 13 so that the third display area 153 of the display module 15 can be arranged in a bent form that can reduce bending stress and/or buckling phenomenon.

According to an embodiment, in the folded state of the foldable electronic device 1, the third display area 153 may be arranged in a bent form, based on the neutral plane inside the third display area 153, capable of reducing collision (e.g., bending stress) between compressive stress occurring in one area of the third display area 153 and tensile stress occurring in the other area of the third display area 153.

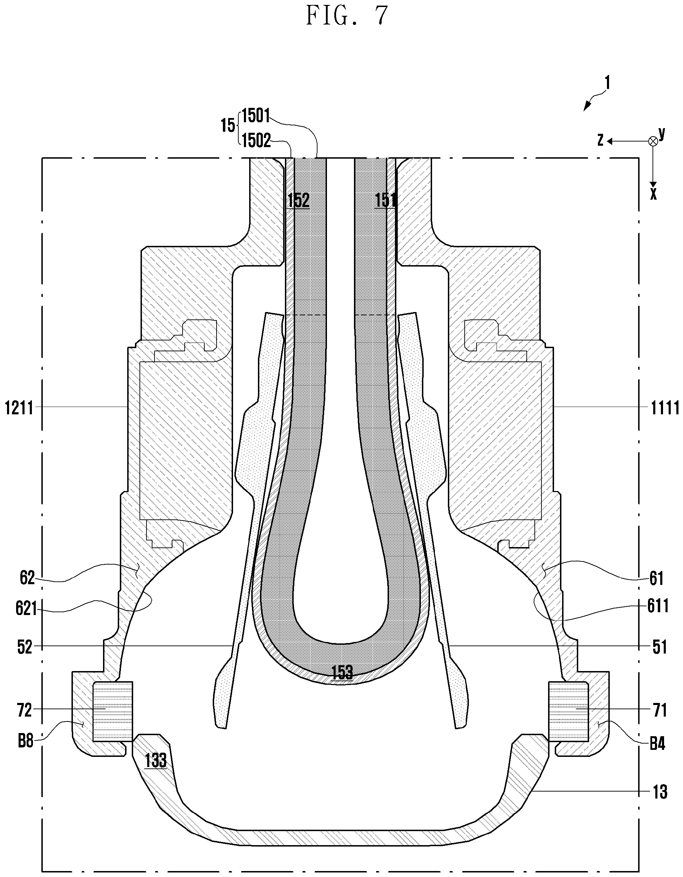

According to an embodiment, when the foldable electronic device 1 switches from the unfolded state to the folded state, the third display area 153 of the first display module 15 may be located between the first plate 51 and the second plate 52 in a water drop shape or dumbbell shape (see FIG. 7) that can reduce damage or permanent deformation.

According to an embodiment, in the folded state of the foldable electronic device 1, the first plate 51 and the second plate 52 may support the third display area 153 of the first display module 15. The third display area 153 may be supported by the first and second plates 51 and 52 between the first and second plates 51 and 52 and thus arranged in a bent shape (e.g., a water drop shape or dumbbell shape) that can reduce bending stress and/or buckling phenomenon.

According to an embodiment, the first slider 1431 of the third hinge module 143 may be combined with the first plate 51, and the second slider 1432 of the third hinge module 143 may be combined with the second plate 52. In response to a change in the relative position of the first plate 51 with respect to the first frame 111 and the relative position of the second plate 52 with respect to the second frame 121 due to the operation (or state change) of the first and second hinge modules 141 and 142 when the angle between the first and second frames 111 and 121 is changed, the first guide rail may be configured to guide a path along which the first slider 1431 combined with the first plate 51 moves with respect to the guide rail 1433, and the second guide rail may be configured to guide a path along which the second slider 1432 combined with the second plate 52 moves with respect to the guide rail 1433.

According to an embodiment, the structure in which the third hinge module 143 between the first and second hinge modules 141 and 142 is combined with the first and second plates 51 and 52 can reduce or prevent the phenomenon of the first and second plates 51 and 52 being lifted or the phenomenon of the gap between the first and second plates 51 and 52 being widened.

According to an embodiment, the first support plate 1111 of the first frame 111 may have a first opening 401 (or first hole or first through-hole). The first opening 401 may, for example, pass between the first and third support areas 1111A and 1111B of the first support plate 1111 (see FIG. 3). The second support plate 1211 of the second frame 121 may have a second opening 402 (or second hole or second through-hole). The second opening 402 may, for example, pass between the second and fourth support areas 1211A and 1211B of the second support plate 1211 (see FIG. 3).

According to an embodiment, the foldable electronic device 1 may include a flexible printed circuit board (FPCB) (not separately shown) crossing the hinge portion 14. The FPCB may pass through the first opening 401 and the second opening 402.

According to an embodiment, the first opening 401 and the second opening 402 may overlap and align with each other in the folded state of the foldable electronic device 1.

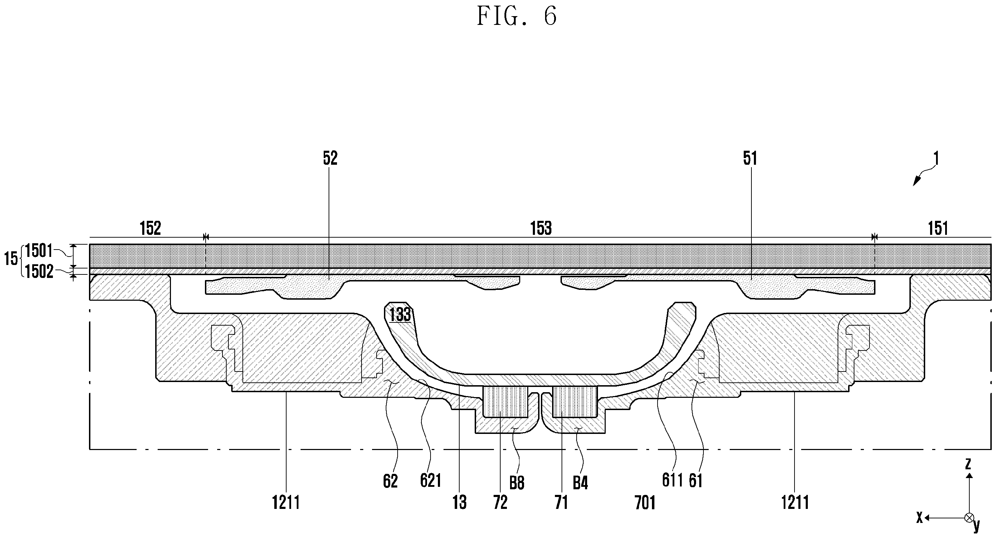

FIG. 6 illustrates a cross-sectional view of a part of the foldable electronic device 1 in an unfolded state taken along line D-D' of FIG. 1, according to an embodiment of the disclosure. FIG. 7 illustrates a cross-sectional view of a part of the foldable electronic device 1 in a folded state taken along line E-E' of FIG. 2, according to an embodiment of the disclosure.

With reference to FIGS. 6 and 7, the foldable electronic device 1 may include the first support plate 1111, the second support plate 1211, the hinge housing 13, the first display module 15, the first plate 51, the second plate 52, a first foreign matter prevention member 71, and/or a second foreign matter prevention member 72. The descriptions of some components that have the same reference numerals as those shown in FIGS. 1, 2, 3, 4, and 5 will be omitted.

According to an embodiment, the first display module 15 may include a flexible display 1501 and a support sheet 1502 (also referred to as a support plate or support layer).

According to an embodiment, although not separately shown, the flexible display 1501 may include a transparent cover (also referred to as a window), an optical layer, a display panel, a base film, and/or a lower panel. The optical layer may be positioned between the transparent cover and the display panel. The display panel may be positioned between the optical layer and the base film. The base film may be positioned between the display panel and the lower panel.

According to an embodiment, the transparent cover of the flexible display 1501 may cover the display panel and protect the flexible display 1501 from the outside. The transparent cover may provide the front side of the foldable electronic device 1. The transparent cover may be provided in the form of a flexible thin film (e.g., a thin film layer). The transparent cover may include, for example, a plastic film (e.g., polyimide (PI) film) or thin glass (e.g., ultra-thin glass (UTG)). In various embodiments, the transparent cover may include a plurality of layers. For example, the transparent cover may have a form in which various coating layers are disposed on a plastic film or thin glass.

According to an embodiment, the optical layer of the flexible display 1501 may include a polarizing layer (or polarizer) and/or a phase retardation layer (or retarder).

According to an embodiment, the display panel of the flexible display 1501 may include a light emitting layer, a thin film transistor (TFT) film (also called a TFT substrate), and/or an encapsulation layer (e.g., a thin-film encapsulation (TFE)). For example, the light emitting layer may include a plurality of pixels implemented with light emitting elements such as organic light emitting diodes (OLEDs) or micro LEDs. The light emitting layer may be disposed on the TFT film through organic evaporation. The TFT film may be positioned between the light emitting layer and the base film. The TFT film may have a film structure in which at least one TFT is disposed on a flexible substrate (e.g., PI film) through a series of processes such as deposition, patterning, and/or etching. The at least one TFT may control the current to the light emitting element of the light emitting layer to turn on or off the pixel or adjust the brightness of the pixel. The display panel may be implemented based on OLED, and the encapsulation layer may cover the light emitting layer. The encapsulation layer may seal the light emitting layer to prevent oxygen and/or moisture from penetrating into the OLED. For the plurality of layers included in the display panel, their stacking structure or stacking order may vary.

According to an embodiment, the base film (also called a protective film, back film, or back plate) of the flexible display 1501 may support and protect the display panel. The base film may include a flexible film formed of a polymer or plastic, such as polyimide or polyester (PET). In various embodiments, at least one additional polymer layer may be disposed on the back of the display panel in addition to the base film.

According to an embodiment, the lower panel of the flexible display 1501 may include a plurality of layers for various functions. The lower panel may include, for example, a light blocking layer, a buffer layer, and/or a bottom layer. The light blocking layer may be positioned between the base film and the buffer layer. The buffer layer may be positioned between the light blocking layer and the bottom layer. The light blocking layer may block at least part of light incident from the outside. The light blocking layer may include, for example, an embossed layer. The embossed layer may be, for example, a black layer containing an uneven pattern. The buffer layer may alleviate external shock applied to the flexible display 1501. The buffer layer may include, for example, a sponge layer or a cushion layer. The bottom layer may diffuse, dissipate, or radiate heat generated from the foldable electronic device 1 or the flexible display 1501. The bottom layer may absorb or shield electromagnetic waves. The bottom layer may alleviate external shock applied to the foldable electronic device 1 or the flexible display 1501. The bottom layer may include, for example, a composite sheet or a metal sheet. In an embodiment, the composite sheet may be a sheet processed by combining layers or sheets with different properties. The composite sheet may include, for example, at least one of polyimide or graphite. For example, the composite sheet may diffuse, dissipate, and/or radiate heat generated from the foldable electronic device 1 or the flexible display 1501. The composite sheets may also be replaced by single sheets containing one material (e.g., polyimide or graphite). The composite sheet may be positioned between the buffer layer and the metal sheet. The metal sheet may form the back of the flexible display 1501. The metal sheet may be, for example, but is not limited to, a copper sheet and may contain a variety of other metal materials. The metal sheet may reduce electro-magnetic interference (EMI) to the first display module 15. In various embodiments, the bottom layer may have a clad metal. The clad metal may be an integrated or single composite material in which a plurality of metals are stacked (or joined). The bottom layer may include various layers for various other functions. In various embodiments, at least one of the plurality of layers (e.g., the light blocking layer, the buffer layer, the composite sheet, and the metal sheet) included in the lower panel may be omitted. In various embodiments, the arrangement order of the plurality of layers included in the lower panel is not limited to the illustrated embodiment and may vary. The plurality of layers included in the lower panel, their stacking structure or stacking order may vary.

According to an embodiment, the flexible display 1501 may include a touch sensing circuit (also referred to as a touch sensor). The touch sensing circuit may include a transparent conductive layer (or film) based on various conductive materials such as indium tin oxide (ITO). The touch sensing circuit may be an add-on type, for example, disposed between the transparent cover and the optical layer. The touch sensing circuit may be an on-cell type, for example, disposed between the optical layer and the display panel. The display panel may be an in-cell type and include the touch sensing circuit or a touch sensing function.

According to an embodiment, the flexible display 1501 may include a pressure sensing circuit (also referred to as a pressure sensor) capable of measuring the strength (pressure) of a touch.

According to various embodiments, the flexible display 1501 may be implemented by omitting some of the components or adding any other component, depending on the form of provision or convergence trend.

According to an embodiment, the support sheet 1502 may be disposed on the back of the flexible display 1501. The back of the flexible display 1501 may be a surface located opposite to the surface from which light is emitted from the display panel including a plurality of pixels. For example, the support sheet 1502 may cover at least part of the lower panel of the flexible display 1501 and be disposed (e.g., attached) to the back of the lower panel.

According to an embodiment, the support sheet 1502 may be combined with the lower panel of the flexible display 1501 through an adhesive material (or glue material). The adhesive material (or glue material) between the flexible display 1501 and the support sheet 1502 may include, for example, a heat-reactive adhesive material (or heat-reactive glue material), a photo-reactive adhesive material (or photo-reactive glue material), a general adhesive (or general glue), or double-sided tape. The adhesive material (or glue material) between the flexible display 1501 and the support sheet 1502 may include, for example, various polymers such as triazine thiol, dithio pyrimitine, or silane-based compounds, or an organic adhesives material (or organic glue material) such as sealant.

According to an embodiment, the support sheet 1502 may improve the durability of the first display module 15. For example, the support sheet 1502 may reinforce the rigidity of the first display module 15. The support sheet 1502 may reduce effects by the load or stress on the first display module 15 in the folded state of the foldable electronic device 1. The support sheet 1502 may reduce or prevent the flexible display 1501 from being damaged by force transmitted when the foldable electronic device 1 switches from the unfolded state to the folded state.

According to an embodiment, the support sheet 1502 may include a metallic material. For example, the support sheet 1502 may include stainless steel. The support sheet may include a variety of other metallic materials.

According to an embodiment, the support sheet 1502 may include engineering plastic.

According to various embodiments, the support sheet 1502 may include a composite material. The support sheet 1502 may include, for example, but is not limited to, carbon fiber reinforced plastics (CFRP).

According to an embodiment, the support sheet 1502 may have a lattice structure (not separately shown) included in the third display area 153 of the first display module 15. The lattice structure may have, for example, a plurality of openings (or slits) formed in the support sheet 1502. The lattice structure may indicate, for example, a pattern structure in which the plurality of openings are regularly arranged. For example, the plurality of openings may be formed periodically, have substantially the same shape, and be repeatedly arranged at regular intervals. The lattice structure may reduce deterioration in flexibility of the third display area 153 of the first display module 15. The lattice structure having the plurality of openings may be referred to as an opening pattern, a hole pattern, or a grid pattern. The support sheet 1502 may also be referred to as a lattice plate.

According to various embodiments, the support sheet 1502 may include a recess pattern (not separately shown) having a plurality of recesses, instead of the lattice structure. For example, the recess pattern may refer to a pattern structure in which a plurality of recesses provided (or formed) on one surface of the support sheet 1502 facing the lower panel of the flexible display 1501 or on the surface opposite to the one surface are regularly arranged in a sunk shape.

According to various embodiments, the lattice structure or the recess pattern may be extended to the first display area 151 and/or the second display area 152 of the first display module 15 in the support sheet 1502.

According to various embodiments, the support sheet 1502 having the lattice structure or the recess pattern, or a conductive member corresponding thereto, may be provided as a plurality of layers.

According to various embodiments, the support sheet 1502 may reduce electromagnetic interference (EMI) regarding the flexible display 1501.

According to various embodiments, the support sheet 1502 may diffuse or dissipate heat emitted from a heat-generating component (e.g., a display driving circuit such as a display drive integrated circuit (DDI) or DDI chip).

According to various embodiments, although not separately shown, the support sheet 1502 may be disposed between the base film and the lower panel of the flexible display 1501. In various embodiments, the lower panel of the flexible display 1501 may have an opening (not separately shown) provided (or formed) to correspond to the hinge portion 14. The opening of the lower panel may reduce the decrease in flexibility of the flexible display 1501 due to the support sheet 1502.

According to an embodiment, when viewed in the direction of the first center line A (see FIG. 1) of the foldable electronic device 1 in the unfolded state of the foldable electronic device 1, the first display module 15 may be arranged flat in the first direction. When viewed in the direction of the first center line A (see FIG. 1) of the foldable electronic device 1 in the unfolded state of the foldable electronic device 1, the third display area 153 may extend the first display area 151 and the second display area 152 substantially smoothly and flatly.

According to an embodiment, when the foldable electronic device 1 switches from the folded state to the unfolded state, the first plate 51 and the second plate 52 may support the third display area 153 of the first display module 15. One or more hinge modules (e.g., the first hinge module 141, the second hinge module 142, and the third hinge module 143 in FIG. 4) operably connected to the first and second plates 51 and 52 may be configured such that when the foldable electronic device 1 switches from the folded state to the unfolded state, the first and second plates 51 and 52 support the third display area 153 flatly.

According to an embodiment, when the foldable electronic device 1 switches from the unfolded state to the folded state, the first and second plates 51 and 52 operably connected to the one or more hinge modules (e.g., the first hinge module 141, the second hinge module 142, and the third hinge module 143 in FIG. 4) may face each other and form an acute angle. When the foldable electronic device 1 switches from the unfolded state to the folded state, the space between the first and second plates 51 and 52 may be provided in a form that widens toward the hinge housing 13 so that the third display area 153 of the first display module 15 can be arranged in a bent shape (e.g., water drop shape or dumbbell shape) capable of reducing bending stress and/or buckling phenomenon.

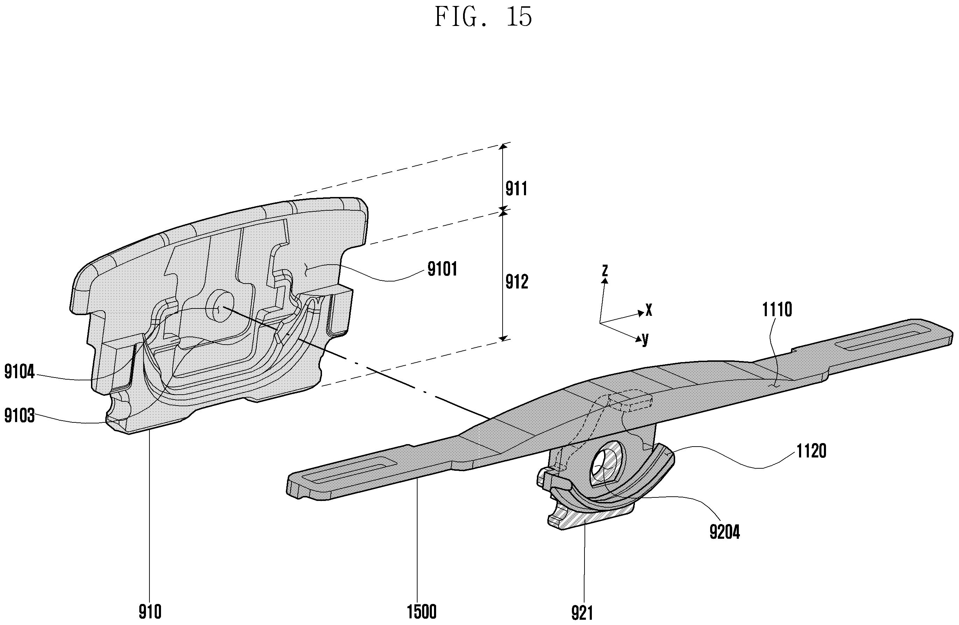

According to an embodiment, in the folded state of the foldable electronic device 1, the first and second display areas 151 and 152 of the first display module 15 may face each other. When viewed in the direction of the first center line A (see FIG. 1) of the foldable electronic device 1 in the folded state of the foldable electronic device 1, the one or more hinge modules (e.g., the first hinge module 141, the second hinge module 142, and the third hinge module 143 in FIG. 4) operatively connected to the first and second plates 51 and 52 may be configured such that the space between the first and second plates 51 and 52 is widened in the second direction perpendicular to the first direction, the first plate 51 forms a first acute angle with respect to the second direction, and the second plate 52 forms a second acute angle with respect to the second direction. The second direction may be a direction from the first and second display areas 151 and 152 facing each other to the third display area 153 (see FIG. 15) in the folded state of the foldable electronic device 1. The first acute angle and the second acute angle may be substantially the same. In the folded state of the foldable electronic device 1, the first plate 51 and the second plate 52 may form an acute angle.

According to an embodiment, in the folded state of the foldable electronic device 1, the first and second display areas 151 and 152 of the first display module 15 may face each other, and the third display area 153 of the display module 15 may be located between the first and second plates 51 and 52. In the folded state of the foldable electronic device 1, the third display area 153 may be supported by the first and second plates 51 and 52 between the first and second plates 51 and 52 and arranged in a bent shape (e.g., a water drop shape or dumbbell shape) capable of reducing bending stress and/or buckling phenomenon.

According to an embodiment, the third display area 153 arranged in a bent shape in the folded state of the foldable electronic device 1 may be provided (or formed) in a substantially symmetrical form with respect to the first center line A (see FIG. 1) of the foldable electronic device 1.

According to an embodiment, the first support plate 1111 may include a first cover area 61 that extends the fourth lateral portion B4 of the first side 1112 (see FIG. 3). In the unfolded state of the foldable electronic device 1, the first cover area 61 may be positioned relatively with respect to the hinge housing 13 so as to hide a part of the hinge housing 13 based on the first center line A (see FIG. 1) of the electronic device 1. In the folded state of the foldable electronic device 1, the first cover area 61 may be positioned relatively with respect to the hinge housing 13 so as not to hide a part of the hinge housing 13 based on the first center line A (see FIG. 1) of the electronic device 1.

According to an embodiment, the hinge housing 13 may include a third curved surface exposed to the outside in the folded state of the foldable electronic device 1 with respect to the first center line A (see FIG. 1) of the foldable electronic device 1, and the first cover area 61 of the first support plate 1111 may include a first curved surface 611 corresponding to the third curved surface of the hinge housing 13.

According to an embodiment, the fourth lateral portion B4 may be defined or interpreted as an element included in the first cover area 61 of the first support plate 1111 rather than the first side 1112 (see FIG. 3).

According to an embodiment, the second support plate 1211 may include a second cover area 62 that extends the eighth lateral portion B8 of the second side 1212 (see FIG. 3). In the unfolded state of the foldable electronic device 1, the second cover area 62 may be positioned relatively with respect to the hinge housing 13 so as to hide a part of the hinge housing 13 based on the first center line A (see FIG. 1) of the electronic device 1. In the folded state of the foldable electronic device 1, the second cover area 62 may be positioned relatively with respect to the hinge housing 13 so as not to hide a part of the hinge housing 13 based on the first center line A (see FIG. 1) of the electronic device 1.

According to an embodiment, the hinge housing 13 may include a fourth curved surface exposed to the outside in the folded state of the foldable electronic device 1 with respect to the first center line A (see FIG. 1) of the foldable electronic device 1, and the second cover area 62 of the second support plate 1211 may include a second curved surface 621 corresponding to the fourth curved surface of the hinge housing 13.

According to an embodiment, the eighth lateral portion B8 may be defined or interpreted as an element included in the second cover area 62 of the second support plate 1211 rather than the second side 1212 (see FIG. 3).

According to an embodiment, a combination of the first curved surface 611 of the first support plate 1111 and the second curved surface 621 of the second support plate 1211 may provide (or form) a recess in which the hinge housing 13 is located in the unfolded state of the foldable electronic device 1.

According to an embodiment, when viewed in the direction of the first center line A (see FIG. 1) of the foldable electronic device 1, the relative position and relative shape of the third display area 153 of the first display module 15 relative to the hinge housing 13 may vary depending on switching between the unfolded state and the folded state of the foldable electronic device 1.

According to an embodiment, the first foreign matter prevention member 71 may be disposed on or combined with the fourth lateral portion B4 of the first side 1112 (see FIG. 3). The first foreign matter prevention member 71 may reduce the gap between the fourth lateral portion B4 and the hinge housing 13. The first foreign matter prevention member 71 may reduce or prevent external foreign matter from entering the interior (e.g., the hinge portion (see FIG. 4)) of the foldable electronic device 1 through a space between the fourth lateral portion B4 and the hinge housing 13.

According to an embodiment, the second foreign matter prevention member 72 may be disposed on or combined with the eighth lateral portion B8 of the second side 1212 (see FIG. 3). The second foreign matter prevention member 72 may reduce the gap between the eighth lateral part B8 and the hinge housing 13. The second foreign matter prevention member 72 may reduce or prevent external foreign matter from entering the interior (e.g., the hinge portion (see FIG. 4)) of the foldable electronic device 1 through a space between the eighth lateral portion B8 and the hinge housing 13.

According to an embodiment, the first foreign matter prevention member 71 and the second foreign matter prevention member 72 may be configured to elastically contact the hinge housing 13. The first and second foreign matter prevention members 71 and 72 may be configured to have durability to maintain their shape even when the foldable electronic device 1 is repeatedly switched between the unfolded state and the folded state.

According to an embodiment, the first foreign matter prevention member 71 and/or the second foreign matter prevention member 72 may have a brush form, a porous form (e.g., a sponge), or a mesh form. The first foreign matter prevention member 71 and/or the second foreign matter prevention member 72 may include various other flexible materials (not separately shown).

According to an embodiment, the first foreign matter prevention member 71 may include a first brush. The first brush may include a supporting portion (also referred to as a fixing portion) and a plurality of bristles disposed on or combined with the supporting portion. The supporting portion may be disposed on or combined with the fourth lateral portion B4 of the first side 1112 (see FIG. 3) through, for example, an adhesive material (or glue material) or screw fastening. The plurality of bristles may be in elastic contact with the hinge housing 13. The plurality of bristles may be implemented to have sufficient elasticity and long-lasting flexibility. The plurality of bristles may be formed from various fibers, such as nylon fibers, for example. The first brush may be referred to as a first sweeper.

According to an embodiment, the second foreign matter prevention member 72 may include a second brush (also referred to as a second sweeper). The second brush may be provided (or formed) in substantially the same manner as the first brush.

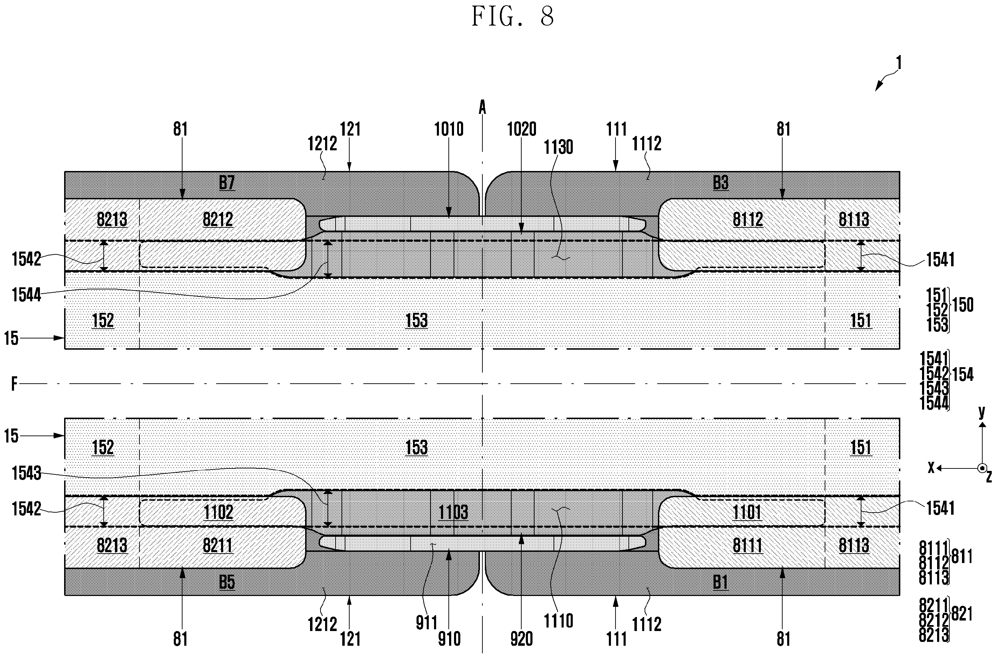

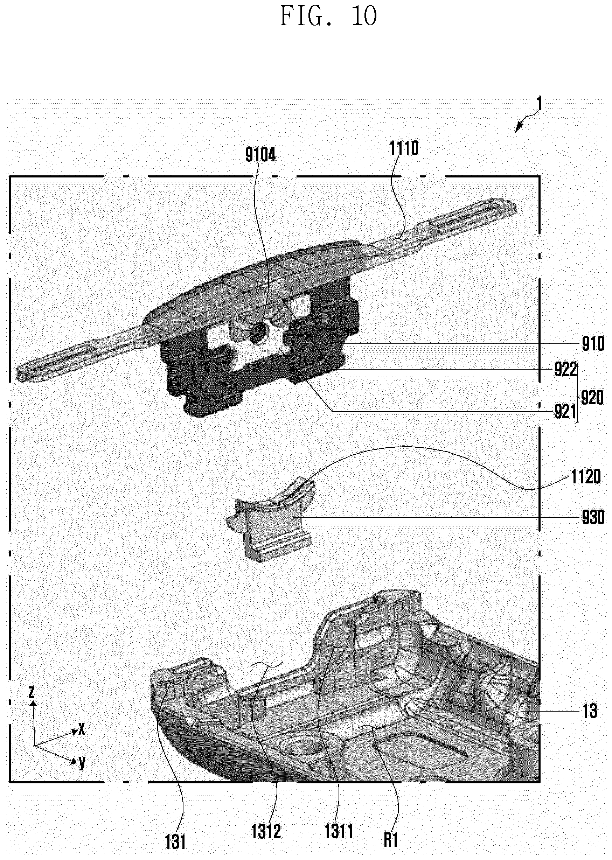

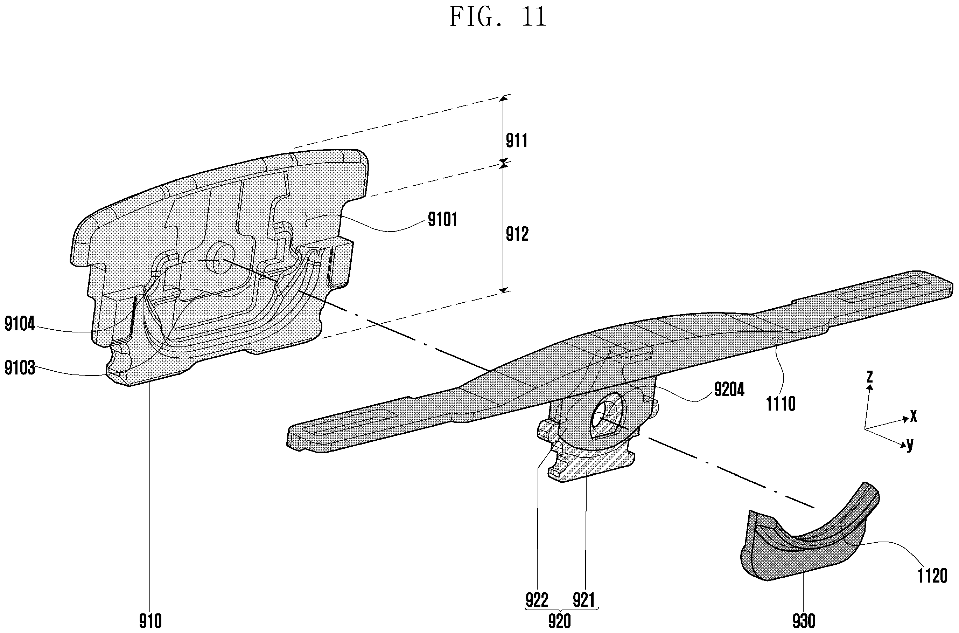

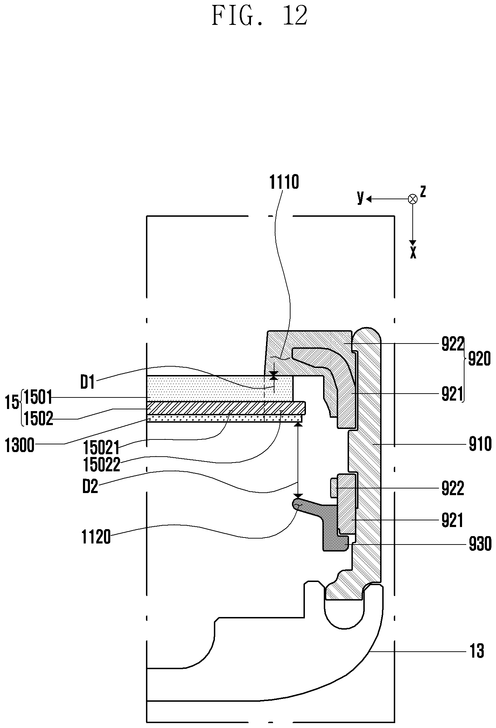

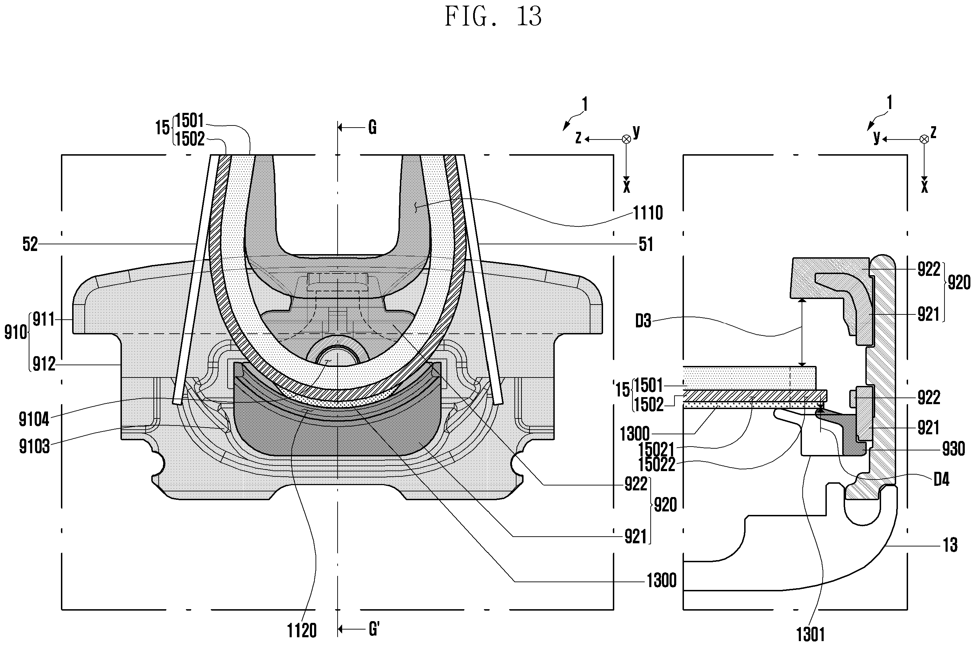

FIG. 8 illustrates a diagram showing a part of a foldable electronic device 1 in an unfolded state, according to an embodiment of the disclosure. FIG. 9 illustrates a perspective view of a part of a foldable electronic device 1 in an unfolded state, according to an embodiment of the disclosure. FIG. 10 illustrates an exploded perspective view of a part of a foldable electronic device 1 in an unfolded state, according to an embodiment of the disclosure. FIG. 11 illustrates a perspective view showing a first support member 910, a first protection member 920, and a second protection member 930, according to an embodiment of the disclosure. FIG. 12 illustrates a cross-sectional view of a part of a foldable electronic device 1 in an unfolded state, according to an embodiment of the disclosure. FIG. 13 illustrates a diagram showing a part of a foldable electronic device 1 in a folded state, according to an embodiment of the disclosure, and a cross-sectional view of a part of the foldable electronic device 1 in a folded state taken along line G-G'.

With reference to FIGS. 8, 9, 10, 11, 12, and 13, the foldable electronic device 1 may include the first frame 111, the second frame 121, the hinge housing 13, the first display module 15, the first plate 51, the second plate 52, a third frame 81, a fourth frame 82, a first support member 910, a first protection member 920, a second protection member 930, a second support member 1010, a third protection member 1020, and/or a fourth protection member (not separately shown). The descriptions of some components that have the same reference numerals as those shown in FIGS. 1, 2, 3, 4, 5, 6, and 7 will be omitted.

According to an embodiment, the first display area 151 of the first display module 15 may be disposed on or combined with the first frame 111. The second display area 152 of the first display module 15 may be disposed on or combined with the second frame 121. The third display area 153 of the first display module 15 may extend the first display area 151 and the second display area 152. When viewed from above the first display module 15 in the unfolded state of the foldable electronic device 1, the third display area 153 may be located between the first and second display areas 151 and 152, and may overlap with the hinge housing 13.

According to an embodiment, when viewed from above the first display module 15 in the unfolded state of the foldable electronic device 1, the first and third lateral portions B1 and B3 included in the first side 1112 of the first frame 111 and the fifth and seventh lateral portions B5 and B7 included in the second side 1212 of the second frame 121 may be extended toward the first center line A of the foldable electronic device 1. When viewed from above the first display module 15 in the unfolded state of the foldable electronic device 1, the first and third lateral portions B1 and B3 and the fifth and seventh lateral portions B5 and B7 may be substantially in contact with each other at the first center line A of the foldable electronic device 1, for example.

According to an embodiment, the first display module 15 may include a border 154 (also referred to as a border area, rim, or rim area) extending the display area 150. The border 154 may include a non-active area, a non-display area, or a non-screen area that does not contain pixels. When viewed in the unfolded state of the foldable electronic device 1, the border 154 may surround at least in part the display area 150. For example, when viewed in the unfolded state of the foldable electronic device 1, the border 154 may extend in a looped shape surrounding the display area 150.

According to an embodiment, the support sheet 1502 of the first display module 15 may include a first sheet area 15021 contained in the display area 150, and a second sheet area 15022 extending the first sheet area 15021 and contained in the border 154 of the display module 15.

According to an embodiment, the first sheet area 15021 of the support sheet 1502 may have a lattice structure or a recess pattern contained in the third display area 153.

According to an embodiment, the lattice structure or the recess pattern may not extend into the second sheet area 15022 of the support sheet 1502.

According to an embodiment, the border 154 of the first display module 15 may include a first border 1541 (also referred to as a first border area, first rim, or first rim area), a second border 1542 (also referred to as a second border area, second rim, or second rim area), a third border 1543 (also referred to as a third border area, third rim, or third rim area), and/or a fourth border 1544 (also referred to as fourth border area, fourth rim, or fourth rim area). The first border 1541 may extend from the first display area 151 of the first display module 15. The second border 1542 may extend from the second display area 152 of the first display module 15. The third border 1543 and the fourth border 1544 may extend from the third display area 153 of the first display module 15. The third border 1543 and the fourth border 1544 may extend the first border 1541 and the second border 1542, respectively, and may be located on opposite sides with the third display area 153 interposed. In switching between the unfolded state and the folded state of the foldable electronic device 1, the third border 1543 and the fourth border 1544 may be arranged in substantially the same shape as the third display area 153. For example, in the unfolded state of the foldable electronic device 1, the third and fourth borders 1543 and 1544 may be arranged in a flat shape that is substantially the same as the third display area 153. For example, in the folded state of the foldable electronic device 1, the third and fourth borders 1543 and 1544 may be arranged in a bent shape that is substantially the same as the third display area 153. The third border 1543 may be referred to as a first bendable border, and the fourth border 1544 may be referred to as a second bendable border.

According to an embodiment, in the unfolded state of the foldable electronic device 1, the third border 1543 and the fourth border 1544 of the first display module 15 may be provided (or formed) substantially symmetrical to each other with respect to a second center line F perpendicular to the first center line A of the foldable electronic device 1. The second center line F may be a reference line at which both regions of the display area 150 of the first display module 15 are substantially symmetrical to each other, for example, in the unfolded state of the foldable electronic device 1.

According to an embodiment, when viewed from above the first display area 151 of the first display module 15, the first border 1541 of the first display module 15 may be located at least in part between the first display area 151 and the first side 1112 of the first frame 111.

According to an embodiment, when viewed from above the second display area 152 of the first display module 15, the second border 1542 of the first display module 15 may be located at least in part between the second display area 152 and the second side 1212 of the first frame 111.

According to an embodiment, when viewed from above the first display module 15 in the unfolded state of the foldable electronic device 1, the third border 1543 of the first display module 15 may include a first area and a second area, based on the first center line A of the foldable electronic device 1. When viewed from above the first display module 15 in the unfolded state of the foldable electronic device 1, the first area of the third border 1543 may be located between the third display area 153 of the first display module 15 and the first lateral portion B1 of the first side 1112. When viewed from above the first display module 15 in the unfolded state of the foldable electronic device 1, the second area of the third border 1543 may be located between the third display area 153 of the first display module 15 and the fifth lateral portion B5 of the second side 1212.

According to an embodiment, when viewed from above the first display module 15 in the unfolded state of the foldable electronic device 1, the fourth border 1544 of the first display module 15 may include a third area and a fourth area, based on the first center line A of the foldable electronic device 1. When viewed from above the first display module 15 in the unfolded state of the foldable electronic device 1, the third area of the fourth border 1544 may be located between the third display area 153 of the first display module 15 and the third lateral portion B3 of the first side 1112. When viewed from above the first display module 15 in the unfolded state of the foldable electronic device 1, the fourth area of the fourth border 1544 may be located between the third display area 153 of the first display module 15 and the seventh lateral portion B7 of the second side 1212.

According to an embodiment, the first display area 151 and the first border 1541 of the first display module 15 may be disposed on or combined with the first support area 1111A (see FIG. 3) of the first support plate 1111 through an adhesive material (e.g., a heat-reactive adhesive material, a photo-reactive adhesive material, a general adhesive, and/or a double-sided tape).

According to an embodiment, the second display area 152 and the second border 1542 of the first display module 15 may be disposed on or combined with the second support area 1211A (see FIG. 3) of the second support plate 1211 through an adhesive material (e.g., a heat-reactive adhesive material, a photo-reactive adhesive material, a general adhesive, and/or a double-sided tape).

According to an embodiment, the display area 150 of the first display module 15 may be defined or interpreted to include the border 154.

According to an embodiment, the third frame 81 may be disposed on or combined with the first side 1112 of the first frame 111. The third frame 81 may include, for example, a first fixing portion (not separately shown), and a first cover portion 811 extending from or connected to the first fixing portion. The first fixing portion may include, for example, one or more first inserts that are inserted into one or more grooves provided (or formed) in the first side 1112 and combined with the first side 1112. When viewed from above the first display module 15 in the unfolded state of the foldable electronic device 1, the first cover portion 811 may provide (or form) a first bezel (also referred to as a first screen bezel) that surrounds one region of the display area 150 of the first display module 15.

According to an embodiment, the first cover portion 811 of the third frame 81 may include a first partial cover portion 8111, a second partial cover portion 8112, and/or a third partial cover portion 8113. When viewed from above the first display module 15 in the unfolded state of the foldable electronic device 1, the first partial cover portion 8111 and the second partial cover portion 8112 may be disposed on opposite sides with the third display area 153 interposed. When viewed from above the first display module 15 in the unfolded state of the foldable electronic device 1, the first partial cover portion 8111 may hide a part of the third border 1543 of the first display module 15, located corresponding to the first lateral portion B1 of the first side 1112, so that it is not exposed to the outside. When viewed from above the first display module 15 in the unfolded state of the foldable electronic device 1, the second partial cover portion 8112 may hide a part of the fourth border 1544 of the first display module 15, located corresponding to the third lateral portion B3 of the first side 1112, so that it is not exposed to the outside. The third partial cover portion 8113 may extend the first and second partial cover portions 8111 and 8112. When viewed from above the first display module 15 in the unfolded state of the foldable electronic device 1, the third partial cover portion 8113 may hide the first border 1541 of the first display module 15 so that it is not exposed to the outside.

According to an embodiment, the third frame 81 may be provided (or formed) in a symmetrical form with respect to the second center line F of the foldable electronic device 1 in the unfolded state.

According to an embodiment, the fourth frame 82 may be disposed on or combined with the second side 1212 of the second frame 121. The fourth frame 82 may include, for example, a second fixing portion (not separately shown), and a second cover portion 821 extending from or connected to the second fixing portion. The second fixing portion may include, for example, one or more second inserts that are inserted into one or more grooves provided (or formed) in the second side 1212 and combined with the second side 1212. When viewed from above the first display module 15 in the unfolded state of the foldable electronic device 1, the second cover portion 821 may provide (or form) a second bezel (also referred to as a second screen bezel) that surrounds one region of the display area 150 of the first display module 15.

According to an embodiment, the second cover portion 821 may include a fourth partial cover portion 8211, a fifth partial cover portion 8212, and/or a sixth partial cover portion 8213. When viewed from above the first display module 15 in the unfolded state of the foldable electronic device 1, the fourth partial cover portion 8211 and the fifth partial cover portion 8212 may be disposed on opposite sides with the third display area 153 interposed. When viewed from above the first display module 15 in the unfolded state of the foldable electronic device 1, the fourth partial cover portion 8211 may hide a part of the third border 1543 of the first display module 15, located corresponding to the fifth lateral portion B5 of the second side 1212, so that it is not exposed to the outside. When viewed from above the first display module 15 in the unfolded state of the foldable electronic device 1, the fifth partial cover portion 8212 may hide a part of the fourth border 1544 of the first display module 15, located corresponding to the seventh lateral portion B7 of the second side 1212, so that it is not exposed to the outside. The sixth partial cover portion 8213 may extend the fourth and fifth partial cover portions 8211 and 8212. When viewed from above the first display module 15 in the unfolded state of the foldable electronic device 1, the sixth partial cover portion 8213 may hide the second border 1542 of the first display module 15 so that it is not exposed to the outside.

According to an embodiment, the fourth frame 82 may be provided (or formed) in a symmetrical form with respect to the second center line F of the foldable electronic device 1 in the unfolded state.

According to an embodiment, the first cover portion 811 of the third frame 81 and the second cover portion 821 of the third frame 81 may be provided (or formed) substantially symmetrical to each other with respect to the first center line A of the foldable electronic device 1 in the unfolded state. For example, when viewed from above the first display module 15 in the unfolded state of the foldable electronic device 1, in a direction perpendicular to the first center line A, the distance that the first and second partial cover portions 8111 and 8112 of the third frame 81 are spaced from the first center line A and the distance that the fourth and fifth partial cover portions 8211 and 8212 of the fourth frame 82 are spaced from the first center line A may be substantially the same.

According to an embodiment, the first support member 910 (also referred to as a fifth bracket) may be disposed on or combined with the first sidewall 131 of the hinge housing 13 so as to connect the first protection member 920 and/or the second protection member 930 with the hinge housing 13. The first protection member 920 and/or the second protection member 930 may be connected to the hinge housing 13 through the first support member 910.

According to an embodiment, the first support member 910 may include a metallic material and/or a non-metallic material. The first support member 910 may be provided (or formed), for example, as an integral or single structure (e.g., a single continuous structure or a complete structure) that includes a metallic material or a non-metallic material. For example, the first support member 910 may be implemented as a combination of some of metallic materials and some of non-metallic materials.

According to an embodiment, the first support member 910 may be provided (or formed) in a substantially symmetrical shape with respect to the first center line A of the foldable electronic device 1.

According to an embodiment, the first support member 910 may have a first surface 9101 and a second surface (not separately shown) facing in a direction opposite to the first surface 9101. For example, the first support member 910 may be provided (or formed) in the form of a plate having the first surface 9101 and the second surface. The first surface 9101 and the second surface may be disposed on opposite sides to each other in the direction of the first center line A of the foldable electronic device 1. The first surface 9101 may face the first hinge module 141 (see FIG. 4).

According to an embodiment, the first sidewall 131 of the hinge housing 13 may have a groove 1311 (also referred to as a fourth recess) corresponding to the first support member 910. The first support member 910 may be fitted into the groove 1311 of the first sidewall 131.

According to an embodiment, the first support member 910 may include a head 911 (also referred to as a head portion) and a tail 912 (also referred to as a tail portion). When viewed in the direction of the first center line A (see FIG. 1) of the foldable electronic device 1, the tail 912 may extend from the head 911 in the second direction perpendicular to the first center line A. For example, referring to FIG. 7, the second direction may be a direction from the first and second display areas 151 and 152 facing each other to the third display area 153 in the folded state of the foldable electronic device 1. When viewed in the direction of the first center line A (see FIG. 1) in the unfolded state of the foldable electronic device 1, the head 911 may have a width greater than the tail 912 in the first direction in which the first display module 15 is arranged flat. The groove 1311 provided (or formed) in the first sidewall 131 of the hinge housing 13 may be provided (or formed) in which the tail 912 of the first support member 910 can be fitted.

According to an embodiment, in the unfolded state of the foldable electronic device 1, the head 911 of the first support member 910 may be exposed to the outside through the first partial cover portion 8111 included in the first cover portion 811 of the third frame 81 and the fourth partial cover portion 8211 included in the second cover portion 821 of the fourth frame 82 and thereby provide (or form) a part of the outer surface of the foldable electronic device 1.

According to an embodiment, although not separately shown, the first support member 910 may be disposed on or combined with the first sidewall 131 of the hinge housing 13 through screw fastening or bonding (e.g., bonding through an adhesive material).

According to an embodiment, the first support member 910 may be disposed on or combined with the first sidewall 131 of the hinge housing 13 through welding.

According to an embodiment, the first sidewall 131 of the hinge housing 13 may have a notch 1312. The second surface (not separately shown) of the first support member 910 may be exposed to the outside through the notch 1312 of the hinge housing 13 and provide (or form) a part of the outer surface of the foldable electronic device 1. The first support member 910 disposed on or combined with the first sidewall 131 of the hinge housing 13 may ensures that a component (e.g., the first hinge module 141 in FIG. 4) located in the hinge housing 13 is invisible from the outside through the notch 1312. The first support member 910 that blocks the notch 1312 may also be referred to as a first cap.

According to an embodiment, the first support member 910 may include a notch insertion portion (not separately shown) inserted into the notch 1312 of the hinge housing 13. The notch insertion portion may provide a surface that is smoothly connected to the third surface 1301 (see FIG. 9) of the hinge housing 13.

According to an embodiment, although not separately shown, the first sidewall 131 of the hinge housing 13 may be provided (or formed) without the notch 1312. The first support member 910 disposed on or combined with the first sidewall 131 may be hidden by the first sidewall 131 and thus be invisible from the outside of the foldable electronic device 1.

According to an embodiment, the first protection member 920 may include a first rigid portion 921 and a first non-rigid portion 922. The first protection member 920 may be provided (or formed) as, for example, an integral or single structure (e.g., a single continuous structure or complete structure) including the first rigid portion 921 and the first non-rigid portion 922. The first rigid portion 921 may be configured to be relatively more rigid or less flexible compared to the first non-rigid portion 922 to stably connect the first non-rigid portion 922 to the first support member 910 and to stably support the first non-rigid portion 922. The first non-rigid portion 922 may be configured to be relatively less rigid or more flexible compared to the first rigid portion 921 to be supported by the first rigid portion 921 combined with the first support member 910 and thus reduce or prevent external foreign matter from flowing in between the hinge housing 13 and the first display module 15. The first protection member 920 or the first non-rigid portion 922 may also be referred to as a third foreign matter prevention member.

According to an embodiment, when the foldable electronic device 1 switches from the folded state to the unfolded state, due to the relative position between the hinge housing 13 and the first display module 15, the first non-rigid portion 922 of the first protection member 920 and the third border 1543 of the first display module 15 may be closer to or in contact with each other compared to the folded state of the foldable electronic device 1. For example, in the unfolded state of the foldable electronic device 1, the first non-rigid portion 922 of the first protection member 920 may be in elastic contact with the third border 1543 of the first display module 15 without causing damage to the first display module 15.

According to an embodiment, the first rigid portion 921 of the first protection member 920 may be formed of a metallic material, and the first non-rigid portion 922 of the first protection member 920 may be formed of a non-metallic material.

According to an embodiment, the first non-rigid portion 922 of the first protection member 920 may be manufactured through injection molding (e.g., insert injection molding). For example, molten resin may be injected into a mold where the first rigid portion 921 formed of a metallic material is placed, and then the molten resin may be cooled to form the first non-rigid portion 922 of a non-metallic material combined with the first rigid portion 921.

According to an embodiment, the first non-rigid portion 922 of the first protection member 920 may include, but is not limited to, rubber or silicone.

According to an embodiment, the first rigid portion 921 of the first protection member 920 may be formed of a first non-metallic material, and the first non-rigid portion 922 of the first protection member 920 may include a second non-metallic material different from the first non-metallic material.

According to an embodiment, the first protection member 920 may be provided (or formed) in a substantially symmetrical form with respect to the first center line A of the foldable electronic device 1. For example, the first rigid portion 921 of the first protection member 920 may be provided (or formed) in a substantially symmetrical shape with respect to the first center line A of the foldable electronic device 1. For example, the first non-rigid portion 922 of the first protection member 920 may be provided (or formed) in a substantially symmetrical shape with respect to the first center line A of the foldable electronic device 1.

According to an embodiment, the first rigid portion 921 of the first protection member 920 may be disposed on or combined with the first surface 9101 of the first support member 910.

According to an embodiment, the first surface 9101 of the first support member 910 may include a mounting portion 9103 for stably placing or supporting the first protection member 920. The mounting portion 9103 may have, for example, a recess into which a part of the first protection member 920 can be fitted. The mounting portion 9103 may have, for example, a protrusion 9104. The first protection member 920 may have a hole 9204 into which the protrusion 9104 is inserted. The hole 9204 may be provided (or formed), for example, by a combination of a first hole formed in the first rigid portion 921 and a second hole formed in the non-rigid portion 922 to overlap with the first hole.

According to an embodiment, the first rigid portion 921 of the first protection member 920 may include a metallic material and may be combined with the first support member 910 of a metallic material through welding.

According to an embodiment, the first rigid portion 921 of the first protection member 920 may be combined with the first surface 9101 of the first support member 910 through mechanical fastening, such as screw fastening, or bonding.

According to an embodiment, the second protection member 930 may be disposed on or combined with the first rigid portion 921 of the first protection member 920. The first rigid portion 921 of the first protection member 920 combined with the first support member 910 may support the second protection member 930 to stably connect the second protection member 930 to the first support member 910. The second protection member 930 may be supported by the first rigid portion 921 of the first protection member 920 combined with the first support member 910 and thus reduce or prevent the inflow of external foreign matter between the hinge housing 13 and the first display module 15. The second protection member 930 may also be referred to as a fourth foreign matter prevention member.

According to an embodiment, when the foldable electronic device 1 switches from the unfolded state to the folded state, due to the relative position between the hinge housing 13 and the first display module 15, the second protection member 930 and the third border 1543 of the first display module 15 may become closer to or contact each other compared to the unfolded state of the foldable electronic device 1. For example, in the unfolded state of the foldable electronic device 1, the second protection member 930 may come into contact with the third border 1543 of the first display module 15 without causing damage to the first display module 15.

According to an embodiment, the second protection member 930 may be provided (or formed) as an integrated or single structure (e.g., a single continuous structure or complete structure) including a metallic material or a non-metallic material.

According to an embodiment, the second protection member 930 may be formed of a non-rigid material. The second protection member 930 may include, for example, but is not limited to, rubber or silicone. For example, in the folded state of the foldable electronic device 1, the second protection member 930 formed of a non-rigid material may be configured to elastically contact the third border 1543 of the first display module 15 without causing damage to the first display module 15.

According to an embodiment, the second protection member 930 may be formed of a rigid material. In the folded state of the foldable electronic device 1, the second protection member 930 may be configured to reduce the distance from the third border 1543 of the first display module 15 without causing damage to the first display module 15.

According to an embodiment, the second protection member 930 may be combined with the first rigid portion 921 of the first protection member 920 through mechanical fastening, such as screw fastening, or bonding.

According to an embodiment, the second protection member 930 may include a metallic material and may be combined with the first rigid portion 921 of a metallic material included in the first protection member 920 through welding.

According to an embodiment, the first protection member 920 may include a first portion 1110, and the second protection member 930 may include a second portion 1120. The first portion 1110 of the first protection member 920 may be provided by the first non-rigid portion 922 of the first protection member 920. When viewed in the direction of the first center line A (see FIG. 1) of the foldable electronic device 1, the third border 1543 of the first display module 15 may be located between the first portion 1110 and the second portion 1120. The first portion 1110 of the first protection member 920 may be located closer to the third border 1543 of the first display module 15 than the second portion 1120 of the second protection member 930 so as to reduce or prevent external foreign matter from flowing in between the hinge housing 13 and the third border 1543 of the first display module 15 in the unfolded state of the foldable electronic device 1. For example, in the unfolded state of the foldable electronic device 1, the third border 1543 of the first display module 15 may be in contact with the first portion 1110 of the first protection member 920. For example, in the unfolded state of the foldable electronic device 1, the front surface of the first display module 15 (e.g., flexible display module) may be in contact with the first portion 1110 of the first protection member 920, and the rear surface of the first display module 15 (e.g., flexible display module) may be spaced apart from the second portion 1120 of the second protection member 930. The second portion 1120 of the second protection member 930 may be located closer to the third border 1543 of the first display module 15 than the first portion 1110 of the first protection member 920 so as to reduce or prevent external foreign matter from flowing in between the hinge housing 13 and the third border 1543 of the first display module 15 in the folded state of the foldable electronic device 1. For example, in the folded state of the foldable electronic device 1, the third border 1543 of the first display module 15 may be in contact with the second portion 1120 of the second protection member 930. For example, in the folded state of the foldable electronic device 1, the front surface of the first display module 15 (e.g., flexible display module) may be in contact with the first portion 1110 of the first protection member 920, and the rear surface of the first display module 15 (e.g., flexible display module) may be in contact with the second portion 1120 of the second protection member 930.

According to an embodiment, the first portion 1110 of the first protection member 920 may be configured to have flexibility and/or elasticity. The first portion 1110 of the first protection member 920 may be disposed substantially flat in the unfolded state of the foldable electronic device 1, and disposed in a bent form in the folded state of the foldable electronic device 1.

According to an embodiment, in the unfolded state of the foldable electronic device 1, the first portion 1110 of the first protection member 920 may be arranged substantially flatly to be in contact with the third border 1543 while reducing the gap with the third border 1543 of the first display module 15 placed substantially flatly.

According to an embodiment, with reference to FIG. 9, the first portion 1110 of the first protection member 920 may include a first partial area 1101, a second partial area 1102, and a third partial area 1103. When viewed from above the first display module 15 in the unfolded state of the foldable electronic device 1, the third partial area 1103 may be located between the head 911 of the first support member 910 and the third display areas 153 of the first display module 15. In the unfolded state of the foldable electronic device 1, the third partial area 1103 may be exposed to the outside and provide (or form) a part of the appearances of the foldable electronic device 1. The first partial area 1101 may extend from the third partial area 1103 between the first border 1541 of the first display module 15 and the first partial cover portion 8111 of the third frame 81. The second partial area 1102 may extend from the third partial area 1103 between the second border 1542 of the first display module 15 and the fourth partial cover portion 8211 of the fourth frame 82. Although not separately shown, the first partial area 1101 of the first portion 1110 may be further expanded toward the third partial cover portion 8113 of the third frame 81. Although not separately shown, the second partial area 1102 of the first portion 1110 may be further expanded toward the sixth partial cover portion 8213 of the fourth frame 82.

According to an embodiment, the first partial area 1101 included in the first portion 1110 of the first protection member 920 may be fixed between the first border 1541 of the first display module 15 and the first partial cover portion 8111 of the third frame 81. For example, as a first fixing portion for the first partial area 1101 of the first portion 1110, the first partial area 1101 of the first portion 1110 may have a recess, and the first partial cover portion 8111 of the third frame 81 may have a protrusion inserted into the recess. The second partial area 1102 included in the first portion 1110 of the first protection member 920 may be fixed between the second border 1542 of the first display module 15 and the fourth partial cover portion 8211 of the fourth frame 82. For example, as a second fixing portion for the second partial area 1102 of the first portion 1110, the second partial area 1102 of the first portion 1110 may have a recess, and the fourth partial cover portion 8211 of the fourth frame 82 may have a protrusion inserted into the recess. In switching between the unfolded state and the folded state of the foldable electronic device 1, a part of the first portion 1110 of the first protection member 920 between the first partial cover portion 8111 of the third frame 81 and the fourth partial cover portion 8211 of the fourth frame 82 may be supported on the first and second fixing portions and transformed together with the third display area 153 of the first display module 15.

According to an embodiment, in the folded state of the foldable electronic device 1, the second portion 1120 of the second protection member 930 may be provided (or formed) in a bent shape (or curved shape) that substantially corresponds to the bent shape in which the third border 1543 of the first display module 15 is disposed. The bent shape of the second portion 1120 may reduce the gap between the second portion 1120 and the third border 1543 of the first display module 15 in the folded state of the foldable electronic device 1.

According to an embodiment, the second support member 1010 may be disposed on the second sidewall 132 (see FIG. 4) of the hinge housing 13 in substantially the same manner as the first support member 910. For example, with respect to the second center line F of the foldable electronic device 1 in the unfolded state, the second support member 1010 may be provided (or formed) in a substantially symmetrical form with the first support member 910.

According to an embodiment, the third protection member 1020 may be disposed on or combined with the second support member 1010 in substantially the same manner as the first protection member 920. For example, with respect to the second center line F of the foldable electronic device 1 in the unfolded state, the third protection member 1020 may be provided (or formed) to be substantially symmetrical with the first protection member 920.

According to an embodiment, the fourth protection member (not separately shown) may be disposed on or combined with the second support member 1010 in substantially the same manner as the second protection member 930. For example, with respect to the second center line F of the foldable electronic device 1 in the unfolded state, the fourth protection member may be provided (or formed) to be substantially symmetrical with the second protection member 930.

According to an embodiment, the third protection member 1020 may include a third portion 1130, and the fourth protection member (not separately shown) may include a fourth portion (not separately shown). The third portion 1130 of the third protection member 1020 may be configured to be substantially symmetrical with the first portion 1110 of the first protection member 920, for example, with respect to the second center line F of the foldable electronic device 1 in the unfolded state. The fourth portion of the fourth protection member may be configured to be substantially symmetrical with the second portion 1120 of the second protection member 930, for example, with respect to the second center line F of the foldable electronic device 1 in the unfolded state. When viewed in the direction of the first center line A (see FIG. 1) of the foldable electronic device 1, the fourth border 1544 of the first display module 15 may be located between the third portion 1130 of the third protection member 1020 and the fourth portion of the fourth protective member. The third portion 1130 of the third protection member 1020 may be located closer to the fourth border 1544 of the first display module 15 than the fourth portion of the fourth protection member so as to reduce or prevent external foreign matter from flowing in between the hinge housing 13 and the fourth border 1544 of the first display module 15 in the unfolded state of the foldable electronic device 1. For example, in the unfolded state of the foldable electronic device 1, the fourth border 1544 of the first display module 15 may be in contact with the third portion 1130 of the third protection member 1020. The fourth portion of the fourth protection member may be located closer to the fourth border 1544 of the first display module 15 than the third portion 1130 of the third protection member 1020 so as to reduce or prevent external foreign matter from flowing in between the hinge housing 13 and the third border 1543 of the first display module 15 in the folded state of the foldable electronic device 1. For example, in the folded state of the foldable electronic device 1, the fourth border 1544 of the first display module 15 may be in contact with the fourth portion of the fourth protection member.

According to an embodiment, the third portion 1130 of the third protection member 1020 may be configured to have flexibility and/or elasticity. The third portion 1130 of the third protection member 1020 may be disposed substantially flat in the unfolded state of the foldable electronic device 1, and disposed in a bent shape in the folded state of the foldable electronic device 1.

According to an embodiment, in the unfolded state of the foldable electronic device 1, the third portion 1130 of the third protection member 1020 may be arranged substantially flatly so as to be in contact with the fourth border 1544 while reducing the gap with the fourth border 1544 of the first display module 15 placed substantially flatly.

According to an embodiment, the fourth portion of the fourth protection member (not separately shown) may be provided (or formed) in a bent shape that substantially corresponds to the bent shape in which the fourth border 1544 of the first display module 15 is disposed in the folded state of the foldable electronic device 1. The bent shape of the fourth portion may reduce the gap between the fourth portion and the fourth border 1544 of the first display module 15 in the folded state of the foldable electronic device 1.

According to an embodiment, a part of the front cover (not separately shown) of the flexible display 1501 included in the border 154 of the first display module 15 may face the first portion 1110 of the first protection member 920 and the third portion 1130 of the third protection member 1020. The second sheet area 15022 included in the border 154 of the first display module 15 in the first support sheets 1502 may face the second portion 1120 of the second protection member 930 and the fourth portion (not separately shown) of the fourth protection member. When viewed in the direction of the first center line A of the foldable electronic device 1 in the unfolded state of the foldable electronic device 1, the first distance D1 at which a part of the front cover of the flexible display 1501 included in the border 154 of the first display module 15 is spaced apart from the first portion 1110 of the first protection member 920 and the third portion 1130 of the third protection member 1020 may be formed to be smaller than the second distance D2 at which the second sheet area 15022 of the support sheet 1502 included in the border 154 of the first display module 15 is spaced apart from the second portion 1120 of the second protection member 930 and the fourth portion of the fourth protection member. The first distance D1 may be, for example, substantially zero. When viewed in the direction of the first center line A of the foldable electronic device 1 in the folded state of the foldable electronic device 1, the fourth distance D4 at which the second sheet area 15022 of the first support sheet 1502 included in the border 154 of the first display module 15 is spaced apart from the second portion 1120 of the second protection member 930 and the fourth portion of the fourth protection member may be formed to be smaller than the third distance D3 at which a part of the front cover of the flexible display 1501 included in the border 154 of the first display module 15 is spaced apart from the first portion 1110 of the first protection member 920 and the third portion 1130 of the third protection member 1020. The fourth distance D4 may be, for example, substantially zero.

According to an embodiment, the first portion 1110 of the first protection member 920 may protect the third border 1543 of the first display module 15 from external loads or external shocks in the unfolded and folded states of the foldable electronic device 1. The third portion 1130 of the third protection member 1020 may protect the fourth border 1544 of the first display module 15 from external loads or external shocks in the unfolded and folded states of the foldable electronic device 1.

According to various embodiments, referring to FIG. 13, the second portion 1120 of the second protection member 930 and the fourth portion (not separately shown) of the fourth protection member may be configured to be located corresponding to the third display area 153 of the first display module 15. For example, when the foldable electronic device 1 switches from the unfolded state to the folded state, the second portion 1120 of the second protection member 930 and the fourth portion of the fourth protection member may be located closer to or in contact with the third display area 153 of the first display module 15 compared to the unfolded state of the electronic device 1.

According to various embodiments, although not separately shown, the second portion 1120 of the second protection member 930 and the fourth portion of the fourth protection member (not separately shown) may be provided (or formed) in a shape corresponding to both the third display area 153 and the border 154 of the first display module 15.

According to an embodiment, the foldable electronic device 1 may further include a first flexible member 1300 disposed on the back of the first display module 15. The first flexible member 1300 may reduce a gap between the third border 1543 of the first display module 15 and the second portion 1120 of the second protection member 930 in the folded state of the foldable electronic device 1.

According to an embodiment, the foldable electronic device 1 may further include a second flexible member (not separately shown) disposed on the back of the first display module 15. The second flexible member may reduce a gap between the fourth border 1544 of the first display module 15 and the fourth portion (not separately shown) of the fourth protection member in the folded state of the foldable electronic device 1.

According to an embodiment, an integrated or single flexible member (not separately shown) may be provided (or formed) to replace the first flexible member 1300 and the second flexible member (not separately shown).

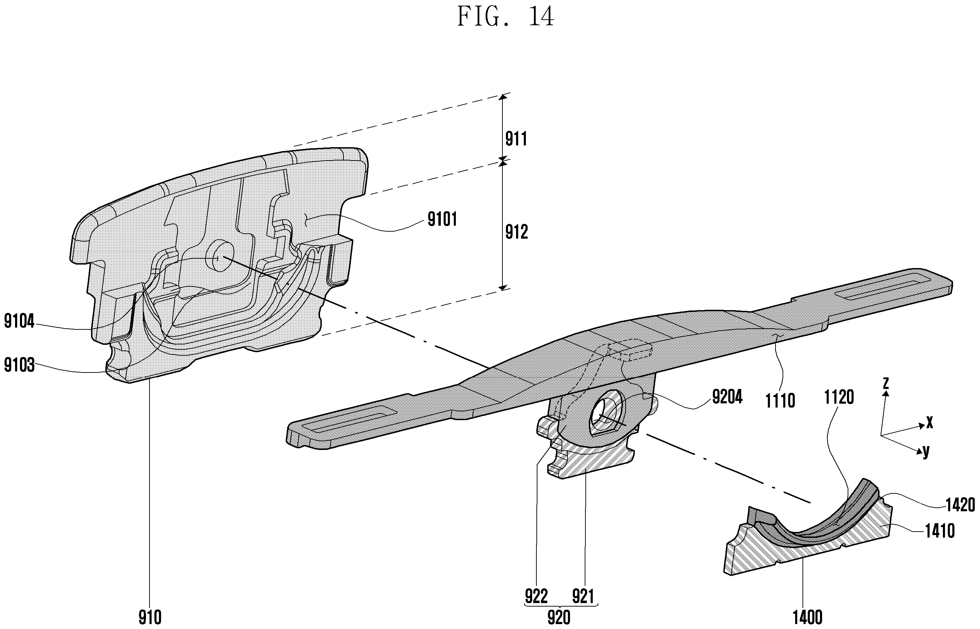

Hereinafter, various embodiments that change or modify the examples of FIGS. 9, 10, 11, 12, and 13 will be described with reference to FIGS. 14, 15, 16, 17, 18, and 19. The examples of FIGS. 14, 15, 16, 17, 18, and 19 may be interpreted as being included in the scope of various embodiments of the disclosure. For any component that is at least partially identical, similar, or related to any component illustrated in FIGS. 9, 10, 11, 12, and 13, the same term and/or the same reference numeral may be used. Any component in FIGS. 9, 10, 11, 12, and 13 that has the same term but has a different reference numeral may be understood as being changed or modified at least in part.

FIG. 14 illustrates a perspective view showing a first support member 910, a first protection member 920, and a second protection member 1400, according to an embodiment of the disclosure.

With reference to FIG. 14, the second protection member 1400 may be provided (or formed) through a combination of a second rigid portion 1410 and a second non-rigid portion 1420. The second protection member 1400 may be provided (or formed) as an integral or single structure (e.g., a single continuous structure or complete structure) including the second rigid portion 1410 and the second non-rigid portion 1420. The second non-rigid portion 1420 may include the second portion 1120.

According to an embodiment, the second rigid portion 1410 of the second protection member 1400 may be combined with the first rigid portion 921 of the first protection member 920.

According to an embodiment, the second rigid portion 1410 of the second protection member 1400 may include a metallic material, and be combined with the first rigid portion of the first protection member 920 of a metallic material through welding.

According to an embodiment, the second rigid portion 1410 of the second protection member 1400 may be combined with the first rigid portion 921 of the first protection member 920 through mechanical fastening, such as screw fastening, or bonding.

According to an embodiment, the second rigid portion 1410 may be configured to be relatively more rigid or less flexible compared to the second non-rigid portion 1420 to stably connect the second non-rigid portion 1420 to the first support member 910 and to stably support the second non-rigid portion 1420. The second non-rigid portion 1420 may be configured to be relatively less rigid or more flexible compared to the second rigid portion 1410 to be supported by the second rigid portion 1410 combined with the first rigid portion 921 of the first support member 910 and thus reduce or prevent external foreign matter from flowing in between the hinge housing 13 and the first display module 15.

According to an embodiment, the second rigid portion 1410 of the second protection member 1400 may be formed of a metallic material, and the second non-rigid portion 1420 of the second protection member 1400 may be formed of a non-metallic material.

According to an embodiment, the second non-rigid portion 1420 of the second protection member 1400 may be manufactured through injection molding (e.g., insert injection molding). For example, molten resin may be injected into a mold where the second rigid portion 1410 formed of a metallic material is placed, and then the molten resin may be cooled to form the second non-rigid portion 1420 of a non-metallic material combined with the second rigid portion 1410.

According to an embodiment, the second rigid portion 1410 and the second non-rigid portion 1420 of the second protection member 1400 may be formed of different non-metallic materials.

According to an embodiment, the second non-rigid portion 1420 of the second protection member 1400 may include, but is not limited to, a flexible material such as rubber or silicone or an elastic material.

According to various embodiments, the second portion 1120 of the second protection member 1400 may include a brush, a porous form (e.g., a sponge), or a mesh form.

According to various embodiments, the second portion 1120 of the second protection member 1400 may include a third brush. The third brush may include a plurality of bristles. The plurality of bristles may be implemented to have sufficient elasticity and long-lasting flexibility. The plurality of bristles may be formed from various fibers, such as nylon fibers, for example. The third brush may be referred to as a third sweeper.

According to an embodiment, a combination (not separately shown) that is at least partially the same as or similar to the combination of the first support member 910, the first protection member 920, and the second protection member 1400 may be provided corresponding to the second sidewall 132 (see FIG. 4) of the hinge housing 13 and the fourth border 1544 (see FIG. 8) of the first display module 15.

FIG. 15 illustrates a perspective view showing a first support member 910, a first rigid portion 921, and a fifth protection member 1500, according to an embodiment of the disclosure.

With reference to FIG. 15, the fifth protection member 1500 may be provided as an integrated or single structure (e.g., a single continuous structure or complete structure) including the first portion 1110 and the second portion 1120. The fifth protection member 1500 may be formed of a non-rigid material.

According to an embodiment, an integrated or single structure including the first rigid portion 921 and the fifth protection member 1500 may be provided (or formed).

According to an embodiment, the first rigid portion 921 may be formed of a metallic material, and the fifth protection member 1500 may be formed of a non-metallic material.

According to an embodiment, the fifth protection member 1500 may be manufactured through injection molding (e.g., insert injection molding). For example, molten resin may be injected into a mold where the first rigid portion 921 formed of a metallic material is placed, and then the molten resin may be cooled to form the fifth protection member 1500 of a non-metallic material combined with the first rigid portion 921.

According to an embodiment, the first rigid portion 921 and the fifth protection member 1500 may be formed of different non-metallic materials.

According to an embodiment, the fifth protection member 1500 may include, but is not limited to, a flexible material such as rubber or silicone or an elastic material.

According to an embodiment, a combination (not separately shown) that is at least partially identical or similar to the combination of the first support member 910, the first rigid portion 921, and the fifth protection member 1500 may be provided to correspond to the second sidewall 132 (see FIG. 4) of the hinge housing 13 and the fourth border 1544 (see FIG. 8) of the first display module 15.

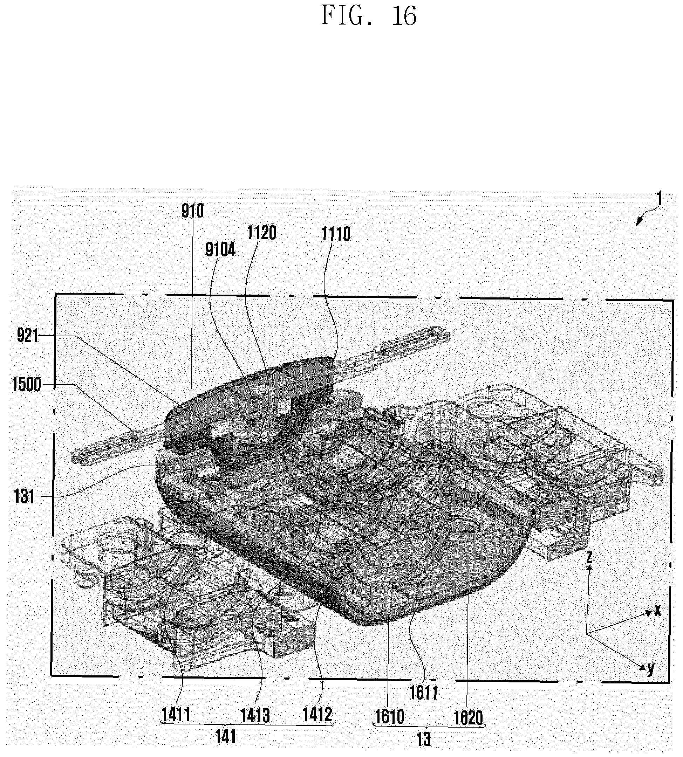

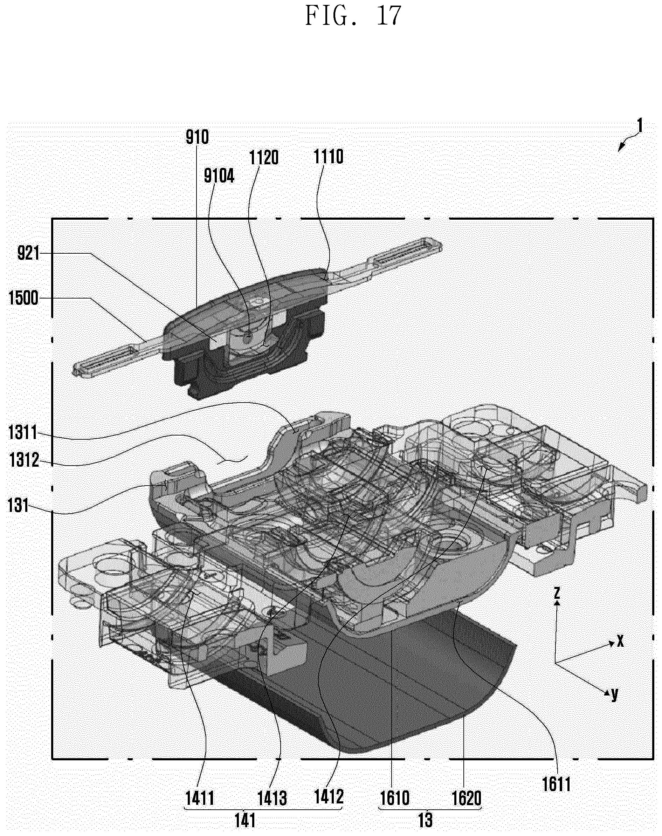

FIG. 16 illustrates a perspective view of a part of a foldable electronic device 1, according to an embodiment of the disclosure. FIG. 17 illustrates an exploded perspective view of a part of a foldable electronic device 1, according to an embodiment of the disclosure.

With reference to FIGS. 16 and 17, the foldable electronic device 1 may include the hinge housing 13, the first hinge module 141, the second hinge module 142 (see FIG. 4), the third hinge module 143 (see FIG. 4), the first support member 910, the first rigid portion 921, and/or the fifth protection member 1500.

According to an embodiment, the hinge housing 13 may include a hinge bracket 1610 and a cover 1620.

According to an embodiment, the hinge bracket 1610 of the hinge housing 13 may include the first sidewall 131, the second sidewall 132 (see FIG. 4), and a support portion 1611 extending the first and second sidewalls 131 and 132. The hinge bracket 1610 may be provided as an integrated or single structure (e.g., a single continuous structure or complete structure) including the first sidewall 131, the second sidewall 132, and the support portion 1611.

According to an embodiment, the support portion 1611 of the hinge bracket 1610 may include the first recess R1 (see FIG. 4) configured to stably place or support the first hinge module 141. The first hinge module 141 may include the first bracket 1411 combined with the first support plate 1111 (see FIG. 4), the second bracket 1412 combined with the second support plate 1211 (see FIG. 4), and the first bracket connector 1413 connecting the first bracket 1411 and the second bracket 1412. The first bracket connector 1413 of the first hinge module 141 may be disposed in the first recess R1 of the hinge housing 13. The first bracket connector 1413 may be combined with the first recess R1 of the hinge housing 13 through, for example, screw fastening.

According to an embodiment, referring to FIG. 4, the support portion 1611 of the hinge bracket 1610 may include the second recess R2 configured to stably place or support the second hinge module 142. The second hinge module 142 may include the fourth bracket 1422 combined with the first support plate 1111, the third bracket 1421 combined with the second support plate 1211, and the second bracket connector 1423 connecting the third bracket 1421 and the fourth bracket 1422. The second bracket connector 1423 of the second hinge module 142 may be disposed in the second recess R2 of the hinge housing 13. The second bracket connector 1423 may be combined with the second recess R2 of the hinge housing 13 through, for example, screw fastening.

According to an embodiment, referring to FIG. 4, the support portion 1611 of the hinge bracket 1610 may include the third recess R3 configured to stably place or support the third hinge module 143. The guide rail 1433 of the third hinge module 143 may be disposed in the third recess R3 of the hinge housing 13. The guide rail 1433 may be combined with the third recess R3 of the hinge housing 13 through, for example, screw fastening.

According to an embodiment, the cover 1620 of the hinge housing 13 may be disposed on or combined with the support portion 1611 of the hinge bracket 1610. It may be disposed on or combined with the support portion 1611 of the hinge bracket 1610 through mechanical fastening, such as screw fastening or snap-fits fastening, or bonding. The snap-fits fastening may refer to, for example, a method in which two fastening elements (e.g., hooks and hook fasteners (also called hook latches)) between the cover 1620 and the support portion 1611 are elastically fastened by pushing the cover 1620 toward the support portion 1611 of the hinge bracket 1610. A combination of the cover 1620 and the support portion 1611 of the hinge bracket 1610 may provide (or form) the sidewall extension 133 of FIG. 4. The cover 1620 may hide internal structures, such as a fastening structure (e.g., screw fastening structure) between one or more hinge modules (e.g., the first hinge module 141 in FIG. 4, the second hinge module 142 in FIG. 4, and the third hinge module 143 in FIG. 4) and the support portion 1611 of the hinge bracket 1610, to be invisible from the outside.

According to an embodiment, a combination of the first support member 910, the first rigid portion 921, and/or the fifth protection member 1500 may be disposed on or combined with the hinge bracket 1610 of the hinge housing 13.

According to an embodiment, a combination (not separately shown) that is at least partially the same or similar to the combination of the first support member 910, the first rigid portion 921, and the fifth protection member 1500 may be disposed on or combined with the hinge bracket 1610 of the hinge housing 13 to correspond to the second sidewall 132 (see FIG. 4) of the hinge housing 13 and the fourth border 1544 (see FIG. 8) of the first display module 15.

According to various embodiments, although not separately shown, the combination of the first support member 910, the first protection member 920, and the second protection member 930 according to the example of FIG. 11 may be disposed on or combined with the hinge bracket 1610 of the hinge housing 13 by replacing the combination of the first support member 910, the first rigid portion 921, and the fifth protection member 1500 according to the example of FIG. 16.

According to various embodiments, although not separately shown, the combination of the first support member 910, the first protection member 920, and the second protection member 1400 according to the example of FIG. 14 may be disposed on or combined with the hinge bracket 1610 of the hinge housing 13 by replacing the combination of the first support member 910, the first rigid portion 921, and the fifth protection member 1500 according to the example of FIG. 16.

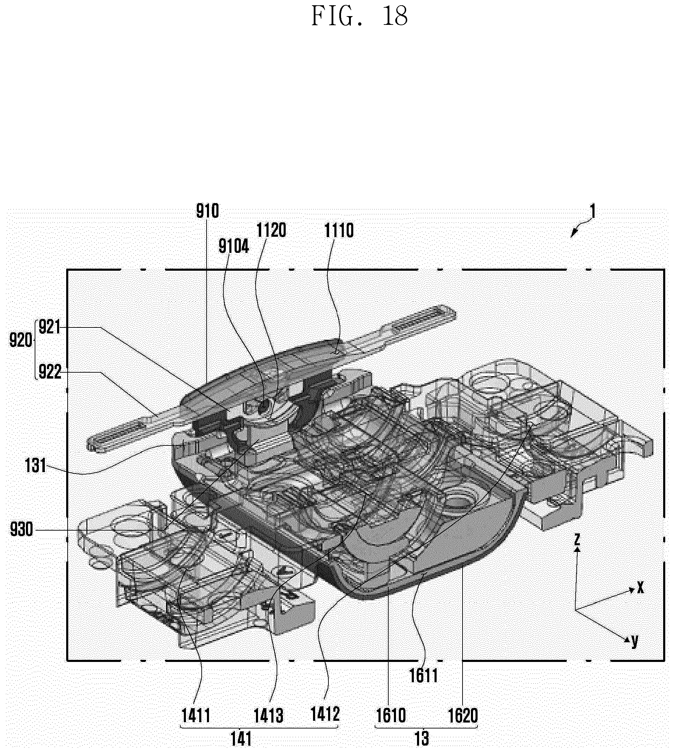

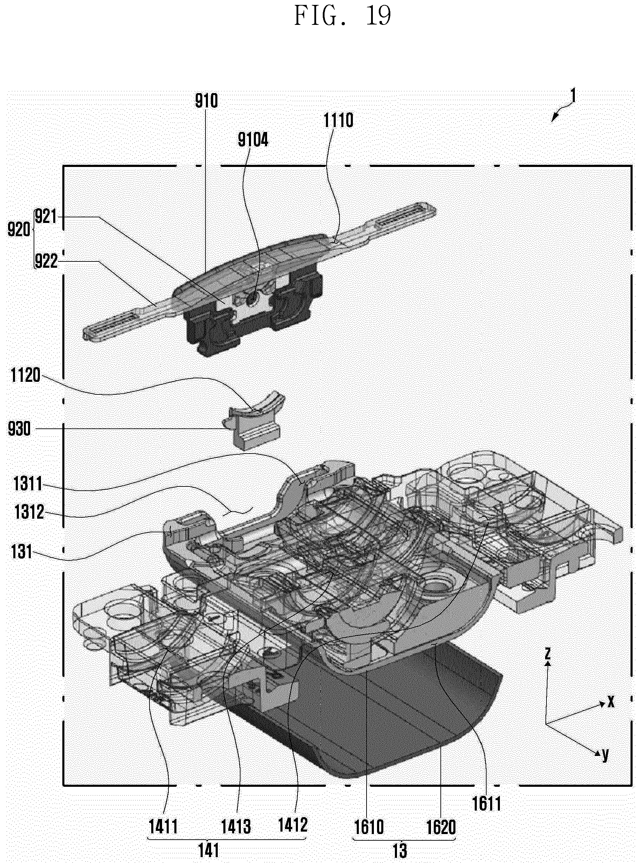

FIG. 18 illustrates a perspective view of a part of a foldable electronic device 1, according to an embodiment of the disclosure. FIG. 19 illustrates an exploded perspective view of a part of a foldable electronic device 1, according to an embodiment of the disclosure.

With reference to FIGS. 18 and 19, the foldable electronic device 1 may include the hinge housing 13, the first hinge module 141, the second hinge module 142 (see FIG. 4), the third hinge module 143 (see FIG. 4), the first support member 910, the first protection member 920, and/or the second protection member 930.

According to an embodiment, the second protection member 930 may be disposed on the first bracket connector 1413 of the first hinge module 141. The second protection member 930 may be combined with the first bracket connector 1413 through mechanical fastening, such as screw fastening, or bonding.

According to various embodiments, the second protection member 930 may be disposed on or combined with the hinge bracket 1610 of the hinge housing 13 other than the first support member 910, the first protection member 920, and the first hinge module 141. The second protection member 930 may be disposed on or combined with the hinge bracket 1610 through mechanical fastening, such as screw fastening, or bonding.

According to various embodiments, the second protection member 930 may be replaced with the second protection member 1400 of FIG. 14.

According to an embodiment, a combination (not separately shown) that is at least partially identical or similar to the combination of the first support member 910, the first protection member 920, and the second protection member 930 may be combined with the second bracket connector 1423 (see FIG. 4) of the second hinge module 142 to correspond to the second sidewall 132 (see FIG. 4) of the hinge housing 13 and the fourth border 1544 (see FIG. 8) of the first display module 15.

According to embodiments of the disclosure, a foldable electronic device 1 includes a first housing 11, a second housing 12, and a hinge module (e.g., the first hinge module 141) configured to connect the first housing 11 and the second housing 12. The foldable electronic device 1 includes a flexible display module (e.g., the first display module 15) extending from the first housing 11 to the second housing 12. The foldable electronic device 1 includes a hinge housing 13 combined with the hinge module (e.g., the first hinge module 141). The foldable electronic device 1 includes a flexible first portion 1110 connected to the hinge housing 13. The flexible first portion 1110 is configured to cover a border (e.g., the third border 1543) corresponding to the hinge module (e.g., the first hinge module 141) in the flexible display module 15. The foldable electronic device 1 includes a second portion 1120 connected to the hinge housing 13. The second portion 1120 is spaced apart from the flexible first portion 1110 with the border (e.g., the third border 1543) interposed. The flexible first portion 1110 is located closer to the border (e.g., the third border 1543) than the second portion 1120 in an unfolded state of the foldable electronic device 1. The second portion 1120 is located closer to the border (e.g., the third border 1543) than the flexible first portion 1110 in a folded state of the foldable electronic device 1.

According to embodiments of the disclosure, the hinge housing 13 may include a sidewall (e.g., the first sidewall 131) corresponding to the border (e.g., the third border 1543). The foldable electronic device 1 may further include a support member (e.g., the first support member 910) combined with the sidewall (e.g., the first sidewall 131). The flexible first portion 1110 may be connected to the sidewall (e.g., the first sidewall 131) through the support member (e.g., the first support member 910).

According to embodiments of the disclosure, the foldable electronic device 1 may include a first rigid portion 921 combined with the support member (e.g., the first support member 910) and a first non-rigid portion 922 disposed on the first rigid portion 921. The first non-rigid portion 922 may include the flexible first portion 1110.

According to embodiments of the disclosure, the second portion 1120 may be connected to the sidewall (e.g., the first sidewall 131) through the first rigid portion 921.

According to embodiments of the disclosure, the foldable electronic device 1 may include a second rigid portion 1410 combined with the first rigid portion 921 and a second non-rigid portion 1420 disposed on the second rigid portion 1410. The second non-rigid portion 1420 may include the second portion 1120.

According to embodiments of the disclosure, the second portion 1120 may be connected to the sidewall (e.g., the first sidewall 131) through the support member (e.g., the first support member 910).

According to embodiments of the disclosure, the second portion 1120 may be supported by the hinge housing 13 and be spaced apart from the flexible first portion 1110 with the border (e.g., the third border 1543) interposed.

According to embodiments of the disclosure, the hinge module 141 may include a first bracket 1411 combined with the first housing 11, a second bracket 1412 combined with the second housing 12, and a bracket connector 1413 connecting the first bracket 1411 and the second bracket 1412 and combined with the hinge housing 13. The second portion 1120 may be connected to the hinge housing 13 through the bracket connector 1413.

According to embodiments of the disclosure, the foldable electronic device 1 may include an integrated or single structure 1500 including the flexible first portion 1110 and the second portion 1120.

According to embodiments of the disclosure, the flexible display module (e.g., the first display module 15) may include a first display area 151 disposed in the first housing 11, a second display area 152 disposed in the second housing 12, and a third display area 153 extending the first display area 151 and the second display area 152 and positioned to correspond to the hinge module (e.g., the first hinge module 141). The border (e.g., the third border 1543) may be included in the third display area 153.

According to embodiments of the disclosure, in the folded state of the foldable electronic device 1, the first display area 151 and the second display area 152 may face each other, and the third display area 153 may be bent. The second portion 1120 may be formed in a bent shape corresponding to the border (e.g., the third border 1543) in the folded state of the foldable electronic device 1.

According to embodiments of the disclosure, the foldable electronic device 1 may include a first plate 51 and a second plate 52 operably connected to the hinge module (e.g., the first hinge module 141). The hinge module (e.g., the first hinge module 141) may be configured so that the first plate 51 and the second plate 52 face each other with the third display area 153 interposed in the folded state of the foldable electronic device 1. The third display area 153 may be supported by the first plate 51 and the second plate 52 and bent in the folded state of the foldable electronic device 1.

According to embodiments of the disclosure, the foldable electronic device 1 may further include a flexible member 1300 located between the flexible display module (e.g., the first display module 15) and the second portion 1120 and disposed on the flexible display module (e.g., the first display module 15).

According to embodiments of the disclosure, the flexible display module (e.g., the first display module 15) may include a flexible display 1501 and a support sheet 1502 disposed on a rear surface of the flexible display 1501. The flexible first portion 1110 may face a region of the flexible display 1501 included in the border (e.g., the third border 1543). The second portion 1120 may face a region of the support sheet 1502 included in the border (e.g., the third border 1543).

According to embodiments of the disclosure, the support sheet 1502 may have a plurality of openings formed in a region of the flexible display module (e.g., the first display module 15) corresponding to the hinge module (e.g., the first hinge module 141).

According to embodiments of the disclosure, a foldable electronic device 1 includes a first housing 11, a second housing 12, and a hinge module (e.g., the first hinge module 141) configured to connect the first housing 11 and the second housing 12. The foldable electronic device 1 includes a flexible display module (e.g., the first display module 15) extending from the first housing 11 to the second housing 12. The foldable electronic device 1 includes a hinge housing 13 combined with the hinge module (e.g., the first hinge module 141). The foldable electronic device 1 includes a flexible first portion 1110. The flexible first portion 1110 is connected to the hinge housing 13 to cover a border (e.g., the third border 1543) corresponding to the hinge module (e.g., the first hinge module 141) in the flexible display module (e.g., the first display module 15). The foldable electronic device 1 includes a second portion 1120. The second portion 1120 is connected to the hinge housing 13 to be spaced apart from the flexible first portion 1110 with the border (e.g., the third border 1543) interposed. In a folded state of the foldable electronic device 1, a front surface of the flexible display module (e.g., the first display module 15) is in contact with the flexible first portion 1110. In the folded state of the foldable electronic device 1, a rear surface of the flexible display module (e.g., the first display module 15) is in contact with the second portion 1120.

According to embodiments of the disclosure, the second portion 1120 may be supported by the hinge housing 13 and be spaced apart from the flexible first portion 1110 with the border (e.g., the third border 1543) interposed.

According to embodiments of the disclosure, the hinge module (e.g., the first hinge module 141) may include a first bracket 1411 combined with the first housing 11, a second bracket 1412 combined with the second housing 12, and a bracket connector 1413 connecting the first bracket 1411 and the second bracket 1412 and combined with the hinge housing 13. The second portion 1120 may be connected to the hinge housing 13 through the bracket connector 1413 so as to be spaced apart from the flexible first portion 1110 with the border (e.g., the third border 1543) interposed.

According to embodiments of the disclosure, the flexible display module (e.g., the first display module 15) may include a first display area 151 disposed in the first housing 11, a second display area 152 disposed in the second housing 12, and a third display area 153 extending the first display area 151 and the second display area 152 and positioned to correspond to the hinge module (e.g., the first hinge module 141). The border (e.g., the third border 1543) may be included in the third display area 153. In the folded state of the foldable electronic device 1, the first display area 151 and the second display area 152 may face each other, and the third display area 153 may be bent. The second portion 1120 may be formed in a bent shape corresponding to the border (e.g., the third border 1543) in the folded state of the foldable electronic device 1.

According to embodiments of the disclosure, the flexible display module (e.g., the first display module 15) may include a flexible display 1501 and a support sheet 1502 disposed on a rear surface of the flexible display 1501. The support sheet 1502 may have a plurality of openings formed in a region of the flexible display module 15 corresponding to the hinge module (e.g., the first hinge module 141). The flexible first portion 1110 may face a region of the flexible display 1501 included in the border (e.g., the third border 1543). The second portion 1120 may face a region of the support sheet 1502 included in the border (e.g., the third border 1543).

The embodiments in the disclosure and drawings are merely provided as specific examples to more easily explain the technical content and aid understanding of the disclosure, and are not intended to limit the scope of the disclosure. Accordingly, the scope of the embodiments of the disclosure should be construed to include changed or modified forms in addition to the embodiments disclosed herein. Additionally, it will be understood that any embodiment(s) described herein may be used in conjunction with any other embodiment(s) described herein. In particular, it is emphasized that although the disclosure is presented in a form that provides a number of embodiments, each defining a number of features, some of these embodiments are linked only by reference to the same drawing or drawings. The disclosure should be understood to include all combinations of two (or more) embodiments, unless there is an obvious contradiction between them. That is, when features are presented as optional in the disclosure, all combinations of those optional features are included in the disclosure.

## Claims

1. A foldable electronic device (1) comprising:
a first housing (11), a second housing (12), and a hinge module (141) configured to connect the first housing (11) and the second housing (12);
a flexible display module (15) extending from the first housing (11) to the second housing (12);
a hinge housing (13) combined with the hinge module (141);
a flexible first portion (1110) connected to the hinge housing (13) to cover a border (1543) corresponding to the hinge module (141) in the flexible display module (15); and
a second portion (1120) connected to the hinge housing (13) to be spaced apart from the flexible first portion (1110) with the border (1543) interposed,
wherein the flexible first portion (1110) is configured to be located closer to the border (1543) than the second portion (1120) in an unfolded state of the foldable electronic device (1), and the second portion (1120) is configured to be located closer to the border (1543) than the flexible first portion (1110) in a folded state of the foldable electronic device (1).

2. The foldable electronic device of claim 1, wherein the hinge housing (13) includes a sidewall (131) corresponding to the border (1543),
wherein the foldable electronic device (1) further includes a support member (910) combined with the sidewall (131), and
wherein the flexible first portion (1110) is connected to the sidewall (131) through the support member (910).

3. The foldable electronic device of claim 2, comprising a first rigid portion (921) combined with the support member (910) and a first non-rigid portion (922) disposed on the first rigid portion (921),
wherein the first non-rigid portion (922) includes the flexible first portion (1110).

4. The foldable electronic device of claim 3, wherein the second portion (1120) is connected to the sidewall (131) through the first rigid portion (921).

5. The foldable electronic device of claim 3, comprising a second rigid portion (1410) combined with the first rigid portion (921) and a second non-rigid portion (1420) disposed on the second rigid portion (1410),
wherein the second non-rigid portion (1420) includes the second portion (1120).

6. The foldable electronic device of claim 2, wherein the second portion (1120) is connected to the sidewall (131) through the support member (910).

7. The foldable electronic device of claim 1, wherein the second portion (1120) is supported by the hinge housing (13) and is spaced apart from the flexible first portion (1110) with the border (1543) interposed.

8. The foldable electronic device of claim 1, wherein the hinge module (141) includes a first bracket (1411) combined with the first housing (11), a second bracket (1412) combined with the second housing (12), and a bracket connector (1413) connecting the first bracket (1411) and the second bracket (1412) and combined with the hinge housing (13), and
wherein the second portion (1120) is connected to the hinge housing (13) through the bracket connector (1413).

9. The foldable electronic device of claim 1, comprising an integrated or single structure (1500) including the flexible first portion (1110) and the second portion (1120).

10. The foldable electronic device of any one of claims 1 to 9, wherein the flexible display module (15) includes a first display area (151) disposed in the first housing (11), a second display area (152) disposed in the second housing (12), and a third display area (153) extending the first display area (151) and the second display area (152) and positioned to correspond to the hinge module (141), and
wherein the border (1543) is included in the third display area (153).

11. The foldable electronic device of claim 10, wherein in the folded state of the foldable electronic device (1), the first display area (151) and the second display area (152) face each other, and the third display area (153) is bent, and
wherein the second portion (1120) is formed in a bent shape corresponding to the border (1543) in the folded state of the foldable electronic device (1).

12. The foldable electronic device of claim 10 or 11, comprising a first plate (51) and a second plate (52) operably connected to the hinge module (141),
wherein the hinge module (141) is configured so that the first plate (51) and the second plate (52) face each other with the third display area (153) interposed in the folded state of the foldable electronic device (1), and
wherein the third display area (153) is supported by the first plate (51) and the second plate (52) and bent in the folded state of the foldable electronic device (1).

13. The foldable electronic device of any one of claims 1 to 12, further comprising a flexible member (1300) located between the flexible display module (15) and the second portion (1120) and disposed on the flexible display module (15).

14. The foldable electronic device of any one of claims 1 to 13, wherein the flexible display module (15) includes a flexible display (1501) and a support sheet (1502) disposed on a rear surface of the flexible display (1501),
wherein the flexible first portion (1110) faces a region of the flexible display (1501) included in the border (1543), and
wherein the second portion (1120) faces a region of the support sheet (1502) included in the border (1543).

15. The foldable electronic device of claim 13 or 14, wherein the support sheet (1502) has a plurality of openings formed in a region of the flexible display module (15) corresponding to the hinge module (141).
